# EUROPEAN PATENT APPLICATION

(11) **EP 4 194 586 A2**
(43) Date of publication of application: **14.06.2023**
(21) Application number: 22210630.4
(22) Date of filing: 30.11.2022
(51) Int. Cl.: C23C 18/16, B05B 7/06, B05C 13/00, B65G 1/00

(54) **SURFACE TREATMENT APPARATUS**

(30) Priority: 10.12.2021 JP 2021200760
(71) Applicant: C. Uyemura & Co., Ltd., Osaka-shi, Osaka 541-0045 (JP)
(72) Inventor: NISHIMOTO, Kazuyoshi, Hirakata-shi, 573-0065 (JP); TANIGAWA, Masahito, Hirakata-shi, 573-0065 (JP); OKUDA, Tomoji, Hirakata-shi, 573-0065 (JP); NISHINAKA, Yutaka, Hirakata-shi, 573-0065 (JP); UTSUMI, Masayuki, Hirakata-shi, 573-0065 (JP)
(74) Representative: J A Kemp LLP

(57) **Abstract**

A compact and efficient surface treatment apparatus is provided. Surface treatment apparatuses P1 to Pn are lined-up, and a workpiece 4 is taken in and out by an electric actuator 18. The workpiece 4 that has been treated in a surface treatment chamber is transferred to the next surface treatment chamber by moving the entire electric actuator 18. In this way, the workpiece 4 is treated in a plurality of surface treatment chambers.

## Description

### Background of Invention

### 1. Field of the Invention

The present invention relates to a surface treatment apparatus to perform surface treatments such as plating, pretreatment, post-treatment, cleansing, water washing, pickling, etching, desmear, and drying.

### 2. Description of Related Art

In the case where a surface treatment such as plating is performed on a treatment target such as a substrate, an apparatus is used in which the substrate is immersed in a treatment bath filled with a treatment solution (immersion system). When the substrate is immersed in the treatment solution in the treatment bath and one treatment is completed, the substrate is pulled out and moved to a treatment bath for the next treatment to be immersed therein. Repeating this makes it possible to perform surface treatments necessary for the substrate.

Japanese Patent No. 6403739 in Patent Gazette discloses an apparatus in which a treatment solution is discharged onto a substrate held at an upper part and the treatment solution dropped from the substrate is recovered and discharged again.

FIG. 30 shows a surface treatment apparatus described in Japanese Patent No. 6403739 in Patent Gazette. An upper end part of a substrate 206 is pinched and held by a clip 204 of a hanger 202 in a surface treatment chamber 200. On both sides of the substrate 206 held by the hanger 202, pipes 208 for discharging the treatment solution are provided. Each of the pipes 208 has a hole 210 to discharge the treatment solution obliquely upward. The discharged treatment solution flows down the surface of the substrate 206 and reaches the bottom, and is circulated and discharged from the pipes 208 again by a pump 212.

The hanger 202 is moved inside the surface treatment chamber 200 in a direction perpendicular to the surface of a paper plane by a drive mechanism 214.

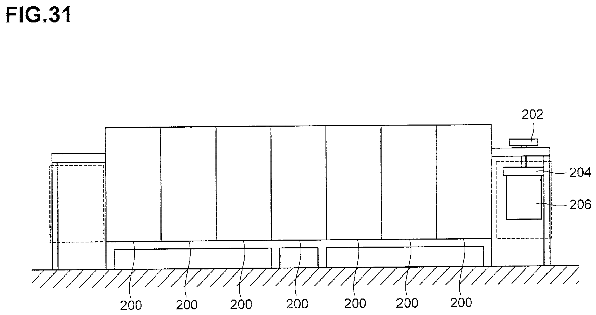

As shown in FIG.31, it is configured that the surface treatment chambers 200 to perform various treatments are provided continuously, and the substrate 206 held by the hanger 202 is moved through the treatment chambers in sequence by the drive mechanism 214.

However, the above related arts had the following problems.

In the apparatus of the immersion treatment system, taking the treatment target (substrate) in and out of the top of the treatment chamber is time-consuming and inefficient.

In contrast, compared to the apparatus of the immersion system, the apparatus based on the system described in Japanese Patent No. 6403739 in Patent Gazette does not require the surface treatment chamber to be filled with treatment solution, which has the advantage of reducing the initial amount of treatment solution required (the amount of solution in the treatment bath) and of being more efficient because the necessary treatment is performed simply by moving the treatment target in a horizontal direction. However, there were problems that the surface treatment order is not flexible since the treatment target is moved through in an arrangement order of a plurality of surface treatment chambers, and that the length of the apparatus becomes long since the surface treatment chambers are arranged continuously in a longitudinal direction.

The present invention is aimed for solving the above problems and providing a compact and efficient surface treatment apparatus.

### Summary of Invention

Some of the features according to the present invention that are independently applicable are listed below. Independently applicable features of the present invention will be listed below.
(1) A surface treatment apparatus according to the present invention includes: a plurality of surface treatment chambers which has an inlet/outlet for introducing and discharging a treatment target and performs a surface treatment on the treatment target; a holding member for holding the treatment target; a loading/unloading mechanism for taking in and out of the treatment target held by the holding member through the inlet/outlet of the surface treatment chambers; an inter-treatment-chamber movement mechanism for moving the treatment target held by the holding member in a state where the treatment target is taken out of the surface treatment chambers by the loading/unloading mechanism, in an arrangement direction of the surface treatment chambers.
   Thus, the layout of surface treatment chambers can be flexibly laid out without being fixed according to the order of surface treatment.
(2) The surface treatment apparatus according to the present invention features that the inter-treatment-chamber movement mechanism includes a moving surface treatment chamber having an inlet/outlet for introducing and discharging the treatment target and performing the surface treatment on the treatment target, and moves the moving surface treatment chamber in which the treatment target is introduced.
   Thus, it is possible to perform the surface treatment while moving the treatment target.
(3) The surface treatment apparatus according to the present invention features that the surface treatment chamber and/or moving surface treatment chamber includes a treatment solution discharging section for discharging a treatment solution onto the holding member or the treatment target in a state of not being in immersed in the treatment solution to allow the treatment solution to flow over a surface of the treatment target held by the holding member.
   Thus, it can also be applied to a pouring system.
(4) The surface treatment apparatus according to the present invention features that the treatment solution discharging section includes a hollow member having treatment solution discharge ports provided at predetermined intervals, and features to further include a swing section for swinging the hollow member in an arrangement direction of the treatment solution discharge ports beyond the predetermined interval.
   Thus, the treatment solution can be discharged onto the treatment target in an even manner.
(5) The surface treatment apparatus according to the present invention features that the surface treatment chamber immerses the treatment target in the treatment solution to perform the surface treatment thereon.
   Thus, it is also applicable to the immersion system.
(6) The surface treatment apparatus according to the present invention features that the surface treatment chamber includes a liquid level change processing part for switching between a state where the treatment target is immersed in the treatment solution and a state where the treatment target is not immersed in the treatment solution.
   Thus, it is efficient to introduce the treatment target from the lateral direction of the surface treatment chamber while it is not immersed in the treatment solution.
(7) The surface treatment apparatus according to the present invention features that the surface treatment chamber includes: a front chamber; and an accumulation chamber switchably configured to be communicated with or independent of the front chamber, in which the accumulation chamber is filled with the treatment solution and the liquid level change processing part switches the liquid level state of the front chamber.
   Thus, the treatment solution can be promptly filled.
(8) The surface treatment apparatus according to the present invention features to include a collection part for collecting the treatment solution adhering to the treatment target in the state of being out of the surface treatment chamber by the loading/unloading mechanism and falling down.
   Thus, contamination due to the falling treatment solution can be prevented.
(9) The surface treatment apparatus according to the present invention features that the surface treatment chamber and/or moving surface treatment chamber includes a shutter for opening/closing the inlet/outlet.
   Thus, the treatment solution can be prevented from scattering.
(10) The surface treatment apparatus according to the present invention features to include a housing box body which covers the treatment target in the state of being out of the surface treatment chamber by the loading/unloading mechanism and is moved by the inter-treatment-chamber movement mechanism.
   Thus, the treatment solution can be prevented from scattering.
(11) The surface treatment apparatus according to the present invention features that the housing box body includes a shutter through which the treatment target is taken in and out.
   Thus, the treatment solution can be prevented from scattering.
(12) The surface treatment apparatus according to the present invention features that the loading/unloading mechanism is an actuator.
   Thus, using an actuator that is less likely to generate dust can prevent defects caused by dust.
(13) The surface treatment apparatus according to the present invention features that a plurality of loading/unloading mechanisms is provided, and each loading/unloading mechanism is configured to be movable independently in the surface treatment chamber arrangement direction.
   Thus, the treatment target can be efficiently taken in and out of the surface treatment chamber.
(14) The surface treatment apparatus according to the present invention features that the surface treatment chambers are provided on both sides of the moving direction of the inter-treatment-chamber movement mechanism.
   Thus, the treatment target can be efficiently taken in and out of the surface treatment chamber.
(15) The surface treatment apparatus according to the present invention features that the surface treatment chambers are arranged in a plurality of rows, and the loading/unloading mechanism moves the treatment target held by the holding member across the plurality of rows of the surface treatment chambers.
   Thus, the treatment target can be efficiently treated at the surface treatment chamber.
(16) The surface treatment apparatus according to the present invention features that a plurality of surface treatment chambers includes: a plurality of surface treatment chambers for performing main treatment and a plurality of surface treatment chambers for performing pre-treatment of the main treatment, some of the plurality of surface treatment chambers for a different main treatment, and features to further include: a control section that controls the inter-treatment-chamber movement mechanism, the control section selecting and moving a necessary plurality of surface treatment chambers among the plurality of surface treatment chambers, according to the required treatment content for the treatment target, to perform a treatment on the treatment target.
   Thus, it is possible to select necessary surface treatment chambers and perform treatment according to the required treatment content.
(17) The surface treatment apparatus according to the present invention features that some of a plurality of surface treatment chambers serves for performing the same treatment and features to further include: a control section that controls the inter-treatment-chamber movement mechanism, wherein the control section moves the different treatment target in parallel in a surface treatment chamber that performs the same treatment based on the treatment time in each surface treatment chamber and performs treatment on the treatment target.
   Thus, it is possible to eliminate the bottleneck caused by treatment that is slower than other treatments in terms of treatment time.
(18) The surface treatment apparatus according to the present invention includes: a holding member for holding a treatment target, a first surface treatment chamber for performing surface treatment on a treatment target held by the holding member; and a first movement mechanism for moving the surface treatment chamber with the treatment target.
   Thus, it is possible to perform the surface treatment while moving the treatment target.
(19) The surface treatment apparatus according to the present invention further includes: a plurality of second surface treatment chambers, which is provided in the moving direction of a first movement mechanism, that has an inlet/outlet for introducing and discharging a treatment target and performs a surface treatment on the treatment target; and a second movement mechanism for taking the treatment target held by the holding member in and out of the second surface treatment chamber through the inlet/outlet of the second surface treatment chamber.
   Thus, the layout of surface treatment chambers can be flexibly laid out without being fixed according to the order of surface treatment, and surface treatment can be performed while moving the treatment target.
(20) A surface treatment apparatus according to the present invention features that a first surface treatment chamber or a second surface treatment chamber includes: a treatment solution discharging section for discharging a treatment solution onto the holding member or the treatment target in a state of not being in immersed in the treatment solution to allow the treatment solution to flow over a surface of the treatment target held by the holding member.
   Thus, it is also applicable to the pouring system.
(21) The surface treatment apparatus according to the present invention features that the treatment solution discharging section includes a hollow member having treatment solution discharge ports provided at predetermined intervals, and features to further include a swing section for swinging the hollow member in an arrangement direction of the treatment solution discharge ports beyond the predetermined interval.
   Thus, the treatment solution can be discharged onto the treatment target in an even manner.
(22) The surface treatment apparatus according to the present invention features that the first surface treatment chamber or the second surface treatment chamber immerses the treatment target in the treatment solution to perform the surface treatment thereon.
   Thus, it is also applicable to the immersion system.
(23) The surface treatment apparatus according to the present invention features that the first surface treatment chamber or the second surface treatment chamber includes a liquid level change processing part for switching between a state where the treatment target is immersed in the treatment solution and a state where the treatment target is not immersed in the treatment solution.
   Thus, it is efficient to introduce the treatment target from the lateral direction of the surface treatment chamber while it is not immersed in the treatment solution.
(24) The surface treatment apparatus according to the present invention features that the first surface treatment chamber or the second surface treatment chamber includes: a front chamber; and an accumulation chamber switchably configured to be communicated with or independent of the front chamber, the accumulation chamber being filled with the treatment solution and the liquid level change processing part switching the liquid level state of the front chamber.
   Thus, the treatment solution can be promptly filled.
(25) The surface treatment apparatus according to the present invention features that the first surface treatment chamber or the second surface treatment chamber includes a shutter for opening/closing the inlet/outlet.
   Thus, the treatment solution can be prevented from scattering.
(26) The surface treatment apparatus according to the present invention features that the loading/unloading mechanism or the second movement mechanism moves the holding member in a horizontal direction.
   Thus, it is possible to take a treatment target in and out of the surface treatment apparatus promptly.
(27) The surface treatment apparatus according to the present invention features to further include a circulating solution reservoir that reserves a treatment solution circulating between the first surface treatment chamber and the circulating solution reservoir.
   Thus, it is possible to use the treatment solution in circulation.
(28) The surface treatment apparatus according to the present invention includes: a supply solution reservoir that supplies a treatment solution to the first surface treatment chamber; and a discharge part that discharges the treatment solution from the first surface treatment chamber.
   Thus, treatment can be performed with a new, clean treatment solution.
(29) The surface treatment apparatus according to the present invention features that the second movement mechanism is an actuator.
   Thus, using an actuator that is less likely to generate dust can prevent defects caused by dust.
(30) The surface treatment apparatus according to the present invention features that a plurality of first surface treatment chambers is provided, and each first surface treatment chamber is configured to be movable independently.
   Thus, the treatment target can be efficiently treated.
(31) The surface treatment apparatus according to the present invention features that the second surface treatment chambers are provided on both sides of the moving direction of the first surface treatment chamber.
   Thus, the treatment target can be efficiently taken in and out of the surface treatment chamber.
(32) The surface treatment apparatus according to the present invention features that the second surface treatment chambers are arranged in a plurality of rows, and the second movement mechanism moves the treatment target held by the holding member across the plurality of rows of the second surface treatment chambers.
   Thus, the treatment target can be efficiently treated at the surface treatment chamber.
(33) The surface treatment apparatus according to the present invention features that a plurality of second surface treatment chambers includes: a plurality of surface treatment chambers for performing main treatment and a plurality of second surface treatment chambers for performing pre-treatment of the main treatment, the plurality of second surface treatment chambers has second surface treatment chambers for a different main treatment, and features to further include: a control section that controls the first movement mechanism, and the control section, according to the required treatment content for the treatment target, selects and moves a necessary plurality of second surface treatment chambers among the plurality of second surface treatment chambers to perform treatment on the treatment target.
   Thus, depending on the treatment required, the necessary surface treatment chamber can be selected for treatment.
(34) The surface treatment apparatus according to the present invention features that a plurality of second surface treatment chambers has second surface treatment chambers that perform the same treatment and features to further include a control section that controls the first movement mechanism, wherein the control section moves the different treatment target in parallel in a second surface treatment chamber that performs the same treatment based on the treatment time in each second surface treatment chamber and performs treatment on the treatment target.
   Thus, it is possible to eliminate the bottleneck caused by treatment that is slower than other treatments in terms of treatment time.
(35) The surface treatment apparatus according to the present invention features to further include a hot water circulation mechanism provided around a surface treatment chamber, a first surface treatment chamber, or a second surface treatment chamber.
   Thus, the temperature in the surface treatment chamber can be kept high, enabling efficient surface treatment requiring high temperatures.
(36) The surface treatment apparatus according to the present invention features that a surface treatment chamber, a first surface treatment chamber, or a second surface treatment chamber includes a heater provided facing the treatment target.
   Thus, a treatment target can be dried.
(37) The surface treatment apparatus according to the present invention features that a surface treatment chamber, a first surface treatment chamber, or a second surface treatment chamber is configured to supply air at a temperature higher than room temperature to the upper part and to suck or discharge air in the chamber from the lower part.
   Thus, the airflow from the upper part to the lower part can stabilize a treatment target. In addition, the temperature in the surface treatment chamber can be kept high, enabling efficient surface treatment requiring high temperatures.
(38) The surface treatment apparatus according to the present invention includes: a discharge chamber having a treatment solution discharging section that discharges a treatment solution onto a treatment target held by a holding member or onto the holding member and allows the treatment solution to flow over the surface of the treatment target held by the holding member; a front chamber provided adjacent to the discharge chamber; and a front chamber discharge chamber moving means that moves a holding member holding a treatment target at least from the front chamber to the discharge chamber and from the discharge chamber to the front chamber.
   Thus, the treatment solution can be prevented from scattering to the outside.
(39) The surface treatment apparatus according to the present invention includes: a treatment solution discharging section that discharges a treatment solution onto a treatment target held by a holding member or onto the holding member and allows the treatment solution to flow over the surface of the treatment target held by the holding member; a swing section that moves the relative positional relationship between the treatment solution discharging section and the treatment target.
   Thus, the treatment solution can be discharged onto the treatment target in an even manner.
(40) The surface treatment apparatus according to the present invention features that the treatment solution discharging section includes a hollow member having treatment solution discharge ports provided at predetermined intervals, and features to further include a swing section for swinging the hollow member in an arrangement direction of the treatment solution discharge ports beyond the predetermined interval.
   Thus, the treatment solution can be discharged onto the treatment target in an even manner.
(41) The surface treatment apparatus according to the present invention features that the treatment solution discharging section includes a hollow member having treatment solution discharge ports provided at predetermined intervals, and features to further include a swing section for swinging the holding member holding the treatment target in an arrangement direction of the treatment solution discharge ports beyond the predetermined intervals.
   Thus, the treatment solution can be discharged onto the treatment target in an even manner.
(42) The holding member according to the present invention is for use in a surface treatment which is performed in such manner that a treatment solution is discharged onto a plate-like holding member and used when the treatment solution flows over the surface of a treatment target held by the holding member to perform a surface treatment, and features that the holding member is formed to have a lengthened part whose width is at least one fifth longer than that of the treatment target.
   Thus, the treatment solution can flow uniformly to the edge of the treatment target.
(43) The holding member according to the present invention features to include dummy plates extending downwardly along the both sides of the plate-like treatment target at the lengthened part.
   Thus, the treatment solution can flow evenly even to the edges of the treatment target., which makes it possible to allow the treatment solution to flow uniformly to the edge of the treatment target.
(44) A production method of a treatment target on which a surface treatment is performed features to comprise the steps of: providing a plurality of surface treatment chambers for performing surface treatments; determining, depending on contents of the surface treatment required for the treatment target, as to which surface treatment chamber and in which order the surface treatment is to be performed; and introducing the treatment targets in turn into the surface treatment chambers for surface treatment based on the determined treatment order.
   Thus, the surface treatment can be performed efficiently.
(45) A surface treatment chamber according to the present invention features to include: a casing having an inlet/outlet shaped to be in coincidence with a cross-sectional shape of a treatment target in order to introduce and discharge the treatment target held by the holding member on a side face; and a treatment solution discharging section that is provided in the casing and discharges a treatment solution onto a treatment target held by a holding member or onto the holding member to allow the treatment solution to flow over the surface of the treatment target held by the holding member, wherein a top surface of the casing is provided with a gap to avoid an interference of a supporting member that supports the holding member with the casing when taking in and out of the treatment target through the inlet/outlet.
   Thus, the treatment target held by holding member can be taken in and out of the side face.

### Brief Description of Drawings

FIG. 1 is a view illustrating an entire configuration of a surface treatment apparatus according to one embodiment of the present invention.
FIG. 2 is a view illustrating details of a vicinity of an attachment/detachment area 2.
FIG. 3 is a perspective view of a hanger 6.
FIG. 4 is a view illustrating details of a clip 50.
FIG. 5 is a view illustrating an attachment processing of a workpiece 4 to the hanger 6.
FIG. 6 is a view illustrating delivery to an electric actuator 18.
FIG. 7 is a view illustrating delivery to the electric actuator 18.
FIG. 8 is a view illustrating a housing box body 30 and surface treatment chambers P.
FIG. 9 is a view illustrating an internal structure of the surface treatment chamber P.
FIG. 10 is a view illustrating a configuration of a shutter 89.
FIG. 11 is a view illustrating a surface treatment chamber Pm performing a drying treatment.
FIG. 12 is a view illustrating an internal structure of the surface treatment chamber accommodating a heater 112.
FIG. 13 is a view illustrating a configuration of the electric actuator 18 and a hanger holding chuck 26.
FIG. 14 is an example of configuring a support part without providing the housing box body 30.
FIG. 15 is a view for explaining a region of swinging a pipe 92.
FIG. 16A is an example of a case of performing an immersion treatment in the surface treatment chambers P.
FIG. 16B is an example of a case of performing an immersion treatment in the surface treatment chamber P.
FIG. 17 is a view illustrating a structure of a shutter 114.
FIG. 18 is a view illustrating the structure of the shutter 114.
FIG. 19 is a view illustrating the structure of the shutter 114.
FIG. 20 is a view illustrating an example of a case of providing a plurality of electric actuators.
FIG. 21 is a view illustrating an example of providing surface treatment chambers on both sides.
FIG. 22 is a view illustrating an example of providing a plurality of rows of surface treatment chambers on one side.
FIG. 23 is a view illustrating an example of providing a water jacket 170.
FIG. 24 is an example illustrating a structure that creates a top-to-bottom air flow in the surface treatment chamber P.
FIG. 25 is a view illustrating a surface treatment apparatus according to a second embodiment.
FIG. 26 is an example of providing a pipe 160 discharging a treatment solution in the housing box body 30.
FIG. 27A is an example of providing a structure for performing an immersion treatment in the housing box body 30.
FIG. 27B is an example of providing shutters 200 and 202 on both sides of the housing box body 30.
FIG. 28 is an example of the hanger 6.
FIG. 29 shows examples of the hanger 6 provided with dummy plates 107.
FIG. 30 is a view illustrating a conventional surface treatment apparatus.
FIG. 31 is a view illustrating the conventional surface treatment apparatus.

### Description of Embodiments

### 1. First Embodiment

### 1.1 Entire configuration

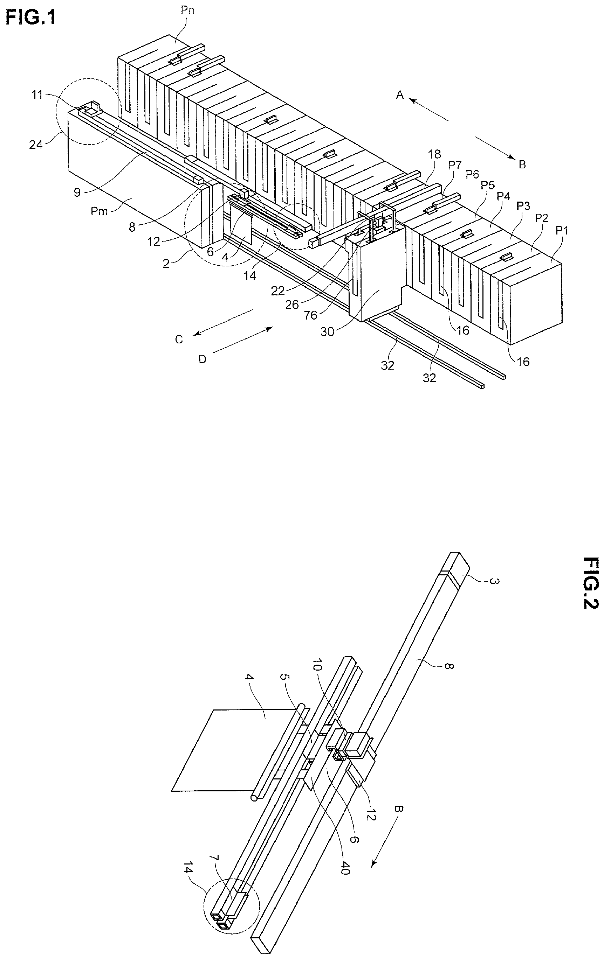

FIG. 1 shows an entire configuration of a surface treatment apparatus according to one embodiment of the present invention. Surface treatment chambers P1, P2, ...and Pn are arranged in a row. Each of these surface treatment chambers performs a plating treatment, pretreatment, post-treatment, cleansing, water washing, pickling, etching, desmear, drying, peeling treatment of plating adhered to a hanger, or the like. A plurality of surface treatment chambers performing the same treatment may be provided.

In order to perform a surface treatment on a workpiece 4 in respective surface treatment chambers P1, P2, ...and Pn, the workpiece 4 is transferred as follows. First, the workpiece 4 is attached to a hanger 6 as a holding member in a workpiece attachment/detachment area 2 indicated by a dashed line. The hanger 6 is held by a hanger holding chuck (not shown) fixed to a slider 12 of an electric actuator 8.

After attaching the workpiece 4 to the hanger 6, the electric actuator 8 is driven to move the workpiece 4 in a direction of an arrow B, and the workpiece 4 is located at a loading/unloading position 14. At the loading/unloading position 14, the hanger 6 holding the workpiece 4 is released and left as is.

Meanwhile, a housing box body 30 is provided opposite to the surface treatment chambers P1, P2, ...and Pn arranged in a row. Rollers (not shown) are provided at the bottom of the housing box body 30 and are movable in directions of arrows A and B by a drive mechanism (not shown). An electric actuator 18 is provided on the top of the housing box body 30.

The housing box body 30 and the electric actuator 18 are moved in the direction of the arrow A to be located on the loading/unloading position 14 where the hanger 6 holding the workpiece 4 is left. In this state, a hanger holding chuck 26 fixed to a slider 22 of the electric actuator 18 is moved in an arrow C direction to pinch and hold the hanger 6. Next, the hanger holding chuck 26 is rotated through an angle of 90 degrees to face a direction to accommodate the workpiece 4 in the housing box body 30.

Thereafter, the workpiece 4 held by the hanger 6 is moved in an arrow D direction by the electric actuator 18 to be accommodated inside through an inlet/outlet 76 of the housing box body 30. In addition, the housing box body 30 and the electric actuator 18 are collectively moved to in the direction of arrow A or arrow B to oppose the surface treatment chamber P1, P2, ...or Pn which performs the first treatment. For example, when the surface treatment chamber P6 performs the first treatment, the housing box body 30 and the electric actuator 18 are moved to the position of the surface treatment chamber P6.

In this state, the hanger 6 is moved in the arrow D direction to introduce the workpiece 4 to the surface treatment chamber P6 through an inlet/outlet 16 of the surface treatment chamber P6. When the surface treatment in the surface treatment chamber P6 is completed, the hanger 6 is moved in the arrow C direction to return the workpiece 4 to the housing box body 30.

Next, the housing box body 30 and the electric actuator 18 are collectively moved to in the direction of arrow A or arrow B to oppose the surface treatment chamber P1, P2, ...or Pn which performs the next treatment. For example, when the surface treatment chamber P7 performs the next treatment, the housing box body 30 and the electric actuator 18 are moved to the position of the surface treatment chamber P7.

In this state, the hanger 6 is moved in the arrow D direction to introduce the workpiece 4 to the surface treatment chamber P7 through the inlet/outlet 16 of the surface treatment chamber P7. When the surface treatment in the surface treatment chamber P7 is completed, the hanger 6 is moved in the arrow C direction to return the workpiece 4 to the housing box body 30.

By repeating the above process, the surface treatment in the surface treatment chamber Pn which is an end of process is completed. Then, the hanger 6 is moved in the arrow C direction to the edge of the electric actuator 18. In this state, the hanger holding chuck 26 is rotated to turn the workpiece 4 to the direction where the workpiece 4 can be introduced to the surface treatment chamber Pm that performs a drying treatment.

Next, the housing box body 30 and the electric actuator 18 are returned in the arrow B direction to locate the hanger 6 at an intermediate loading/unloading position 24. At this position, the hanger 6 is stopped being held by pinching by the hanger holding chuck 26 and left as it is. Accordingly, the hanger 6 holding the workpiece 4 is placed at a starting end of the surface treatment chamber Pm that performs the drying treatment.

The hanger 6 is pinched and held by a hanger holding chuck (not shown) fixed to a slider 11 of an electric actuator 9. Next, the hanger 6 is moved in the arrow B direction to move the workpiece 4 in the surface treatment chamber Pm. In the surface treatment chamber Pm, the hanger is slowly moved in the arrow B. Meanwhile, the workpiece 4 is dried by a heater (not shown).

When the hanger 6 reaches the end of process of the surface treatment chamber Pm, the hanger holding chuck releases the hanger 6 and leave it as is. Next, the hanger holding chuck fixed to the slider 12 of the electric actuator 8 is moved in the arrow A direction to pinch the left hanger 6. Next, the electric actuator 8 moves the hanger 6 in the arrow B direction to locate it in the workpiece attachment/detachment area 2. The treated workpiece 4 is detached from the hanger 6 in the workpiece attachment/detachment area 2.

As described above, the surface treatment apparatus according to the present embodiment is efficient since the workpiece 4 can be moved in and out from the side face of the surface treatment chamber P. In addition, the order of the treatments in the respective surface treatment chambers P1 to Pn can be changed, which is highly flexible. Furthermore, the surface treatment chambers P1 to Pn are arranged in their short-length direction, which makes the apparatus compact in length.

Note that the treatment in each part can be performed by a control circuit having a CPU. The configuration and operation of each part is described in detail below.

### 1.2 Attachment of workpiece 4 to hanger 6

FIG. 2 shows details of the workpiece attachment/detachment area 2. A top plate 40 of the hanger 6 is placed on a placing stand 5. In this state, the workpiece 4 is pinched and held by the hanger 6.

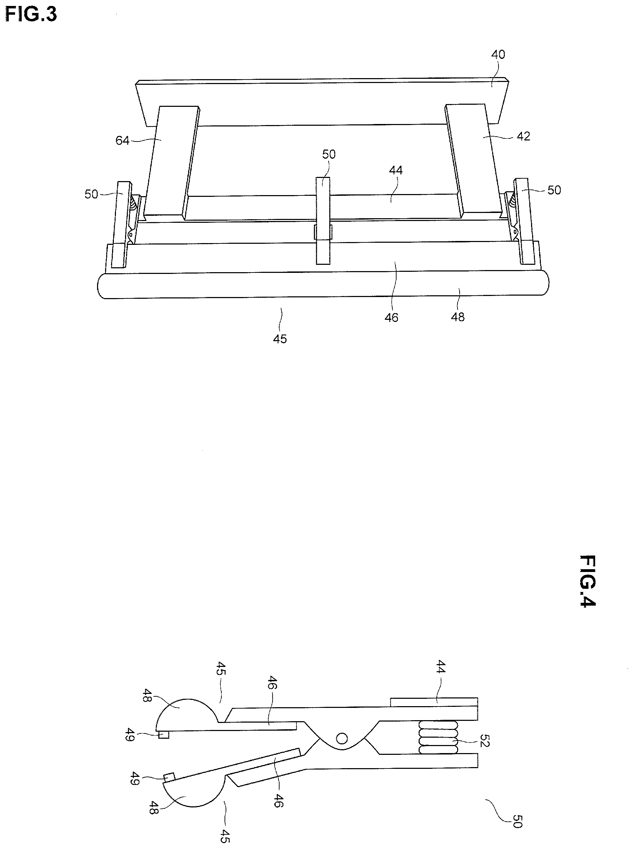

FIG. 3 shows a perspective view of the hanger 6. A hanging plate 42 extends downward from the top plate 40. A clip holding member 44 is laterally fixed to the hanging plate 42. The clips 50 are provided at the both ends and center of the clip holding member 44.

FIG. 4 shows details of the clip 50. The clip 50 is biased by a spring 52 in such a direction that the tips of the clip 50 are closed. FIG. 4 shows a state where the tips have been opened by pressing the spring 52 against it. As shown in FIG. 3, treatment solution receiving members 45 extending along the entire width of the hanger 6 is provided across the tips of the clips 50. As shown in FIG. 4, each treatment solution receiving member 45 has a flat plate 46 forming a proximal portion thereof, and a projected section 48 raised outward in a semicircular shape to form a distal portion thereof. Gripping projections 49 for pinching and grasping the workpiece 4 are provided along an inner lower end of each projected section 48.

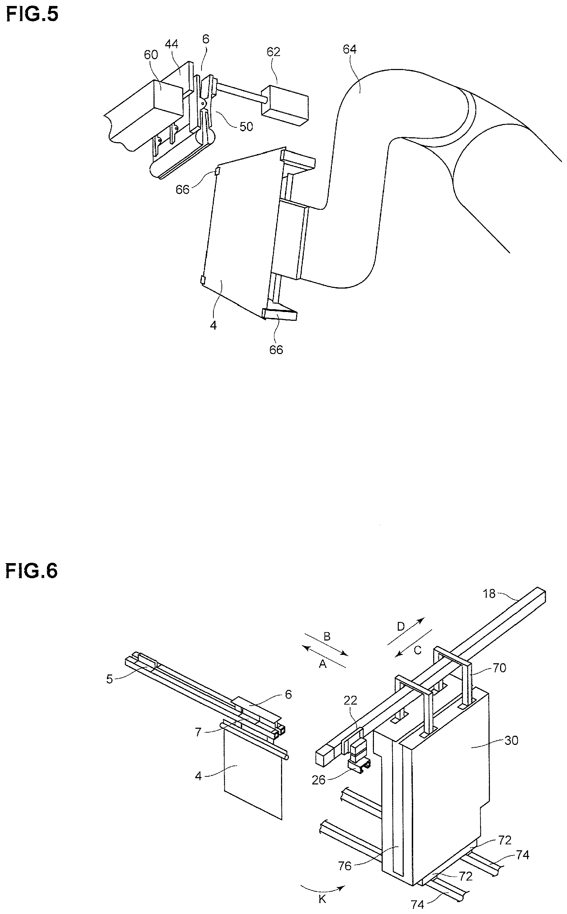

FIG. 2 shows a state where the workpiece 4 has already been pinched in the hanger 6. The process of attaching the workpiece 4 to the hanger 6 is as follows. FIG. 5 shows attachment of the workpiece 4 to the hanger 6. A contact member 60 is brought into contact with the clip holding member 44 in a state where the hanger 6 is placed on the placing stand (not shown in FIG. 5).

A cylinder 62 presses the clip 50 in this state to make the tips in open state as shown in FIG. 4. The plate-like workpiece 4 is held and carried by a distal chuck 66 of a robot arm 64. The robot arm 64 inserts the upper end part of the workpiece 4 into the open tips of each of the clips 50. The cylinder 62 is retrieved in this state to close the clips 50 of the hanger 6. Accordingly, as shown in FIG. 2, the workpiece 4 is held by the hanger 6.

As shown in FIG. 2, the electric actuator 8 is provided in which the slider 12 is moved by a motor 3. A hanger holding chuck 10 is fixed to the slider 12. The hanger holding chuck 10 is configured to be movable in the vertical direction. The tips of the hanger holding chuck 10 can be opened and closed so that the top plate 40 of the hanger 6 can be pinched and held.

FIG.2 shows a state where the hanger holding chuck 10 is opened. From this state, the hanger holding chuck 10 is moved down and the tips thereof are closed to pinch and hold the top plate 40 of the hanger 6. Next, the slider 12 of the electric actuator 8 is moved in the arrow B direction. Then the hanger holding chuck 10 is moved down and the tips thereof is opened to place the hanger 6 on a placing stand 7 on the outgoing deliver position.

### 1.3 Transfer of workpiece 4 to electric actuator 18 (loading/unloading mechanism)

When the hanger 6 is placed on the placing stand 7, the electric actuator 18 which is the loading/unloading mechanism shown in FIG.6 is collectively moved in the arrow A direction. Then the placed hanger 6 holding the workpiece 4 is held by the hanger holding chuck 26 of the electric actuator 18.

To prevent interference of the electric actuator 18 with the electric actuator 8, it is preferred to change the heights thereof or attachment direction of the hanger holding chucks 26 and 10.

The electric actuator 18 is fixed on the top of the housing box body 30 by arms 70. Driving rollers 72 as the inter-treatment-chamber movement mechanism are provided on the bottom of the housing box body 30, so it is configured that the housing box body 30 is movable on rails 74. Therefore, the housing box body 30 and the electric actuator 18 can be moved in the direction of arrow A or arrow B by controlling the rotation of the driving rollers 72.

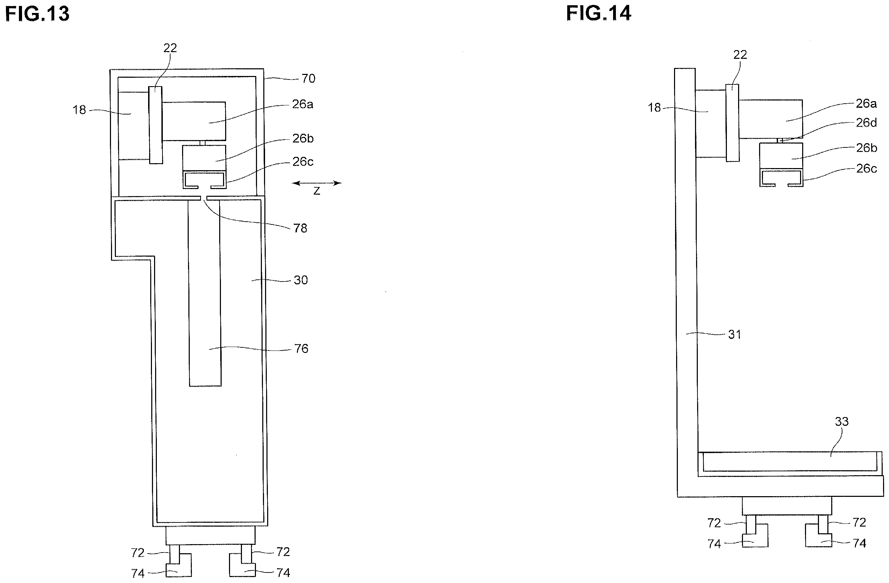

FIG. 13 shows details of the housing box body 30 and the electric actuator 18. The arms 70 are provided on the top of the housing box body 30, and the electric actuator 18 is fixed to the arms 70. The hanger holding chuck 26 is fixed to a slider 22 which is driven by the electric actuator 18.

The hanger holding chuck 26 includes an upper holder 26a fixed to the slider 22 and a lower holder 26b supported to the upper holder 26a by a rotating shaft 26d. The lower holder 26a can be rotated around the rotating shaft 26d by a control mechanism which has a motor and a gear accommodated in the upper holder 26a. A magnetic sensor or optical sensor (not shown) is provided in the upper holder 26a and lower holder 26b so as to oppose them, so it is configured that the rotation to a predetermined angle can be detected. Note that sensors are not required when a stepping motor is used as the motor.

In addition, the lower holder 26b an be moved in the vertical direction. Movement in the vertical direction can be implemented by a mechanism to move the motor and the gear collectively in the vertical direction. Since the movement in the vertical direction dose not recquire very high precision, control by a sensor is not necessary. Of course, a sensor may be provided to control positions by a control circuit.

A chuck 26c is provided on the lower holder 26b. Right and left components of the chuck 26c is movable in an arrow Z direction by a control mechanism accommodated in the lower holder 26b, which makes it possible to pinch or release the top plate 40 of the hanger 6.

In FIG. 6, the housing box body 30 and the electric actuator 18 are moved in the arrow A direction. When the hanger holding chuck 26 fixed to the slider 22 of the electric actuator 18 arrives at a central position of the placed hanger 6, the housing box body 30 and the electric actuator 18 are stopped at the position. It is preferred that a sensor which detects a marker arranged on (or arranged in proximity to) the rail 74 magnetically, electrically, or optically is provided on the central position of the placed hanger 6 to determine by the output of the sensor whether the housing box body 30 and the electric actuator 18 have arrived at a desired position (in the above case, whether the hanger holding chuck 26 has arrived at the central position of the placed hanger 6).

Subsequently, the hanger holding chuck 26 is moved down with its tips in opened state, and then the tips are closed to pinch and hold the top plate 40 of the hanger 6. When the hanger 6 is held, the electric actuator 18 is collectively moved in the arrow B direction. The hanger holding chuck 26 is fixed to the slider 22 of the electric actuator 18 and is movable in the directions of arrows C and D. The hanger holding chuck 26 can not only open/close and vertically move its tips but also rotate as shown by an arrow K.

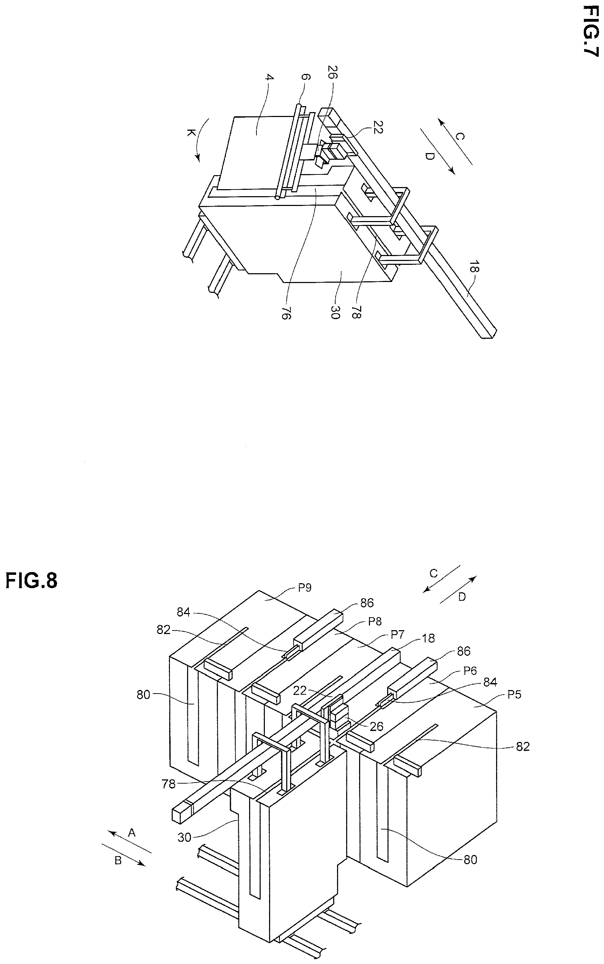

FIG. 7 shows a state where the hanger holding the workpiece 4 is rotated. It is rotated until the workpiece 4 becomes horizontal to an extending direction of the electric actuator 18. Thereafter, the slider 22 is moved in the arrow D direction to introduce the workpiece 4 into the housing box body 30 through the inlet/outlet 76 on the side face of the housing box body 30 (also provided on the opposite side face). A gap 78 is provided on the top of the housing box body 30 to prevent interference of the hanging plate 42 of the hanger 6.

Note that the hanger 6 shown in FIG. 7 is in a different form (the length of the top plate is short) from the hanger 6 shown in FIG. 3. Either of the hangers 6 can be used. Hereafter, description is made assuming the hanger 6 shown in FIG.7 is used.

### 1.4 Treatment of workpiece 4 in treatment chamber P

When the workpiece 4 is introduced into the housing box body 30 by the electric actuator 18 as described above, the hanger holding chuck 26 is continuously moved in the arrow D direction as shown in FIG. 8 to move the workpiece 4 inside the surface treatment chamber P6 through an inlet/outlet 80 provided on the side face of the surface treatment chamber P6. Note that a gap 82 is provided on the top of the surface treatment chamber P6 to prevent interference of the hanging plate 42 of the hanger 6.

The electric actuator 18 stops moving in the arrow D direction when the hanger 6 reaches the top of the placing stand 84. The placing stand 84 is formed by placing L-shaped members back-to-back with a gap between them. The hanger holding chuck 26 is pushed down to install the top plate 40 of the hanger 6 onto the placing stand 84.

Then, the empty hanger holding chuck 26 is pulled up and moved in the arrow C direction back to the center of the housing box body 30.

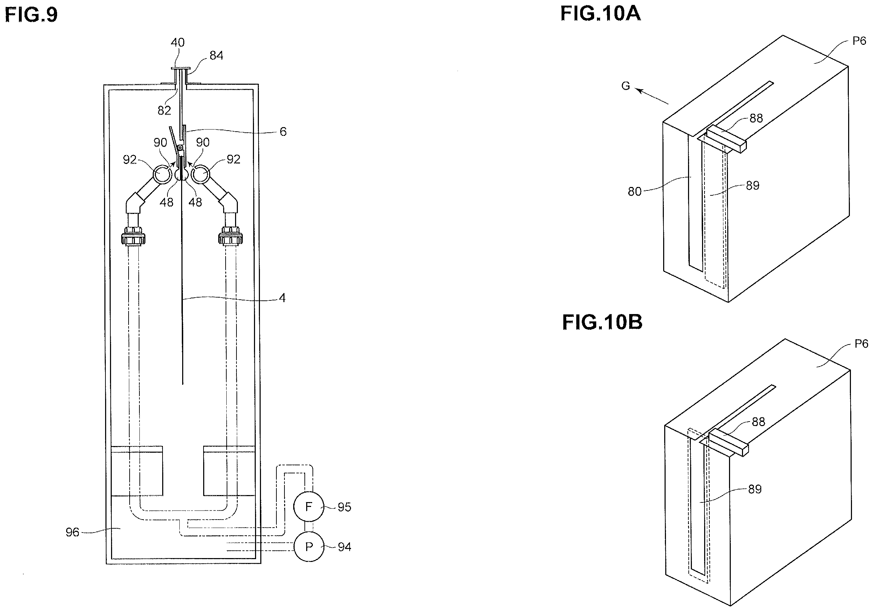

The workpiece 4 introduced into the surface treatment chamber P6 is subjected to surface treatment by the treatment liquid. FIG. 9 shows a cross-sectional view of the surface treatment chamber P9. The placing stand 84 is provided in the upper part, and the top plate 40 of the hanger 6 is mounted thereon. Thus, the hanging plate 42 of the hanger 6 is introduced into the room through the gap 82, and the workpiece 4 held by the hanger 6 is held inside the room.

In this embodiment, the placing stand 84 is not fixed to the ceiling of the surface treatment chamber P6, but is fixed to a swing mechanism 86 fixed to the ceiling as shown in FIG.8.

When the workpiece 4 is introduced into the surface treatment chamber P6, a shutter of the inlet/outlet 80 is closed. FIG. 10A shows a structure of the shutter 89. The top of the shutter 89 is fixed to the slider of the actuator 88 (drive mechanism). In addition, a roller (not shown) is provided below the shutter 89 and is movable on a rail (not shown) provided on the bottom surface of the treatment chamber. Thus, the actuator 88 can open and close the shutter 89. The open state of the shutter 89 is shown in FIG. 10A, and the closed state is shown in FIG. 10B. From the state of FIG. 10A, the actuator 88 allows the shutter 89 to slide in the arrow G direction and close as shown in FIG. 10B. While the treatment solution is discharged, the treatment solution is prevented from leaking out from the inlet/outlet 80 by closing the shutter 89.

Returning to FIG. 9, on both sides of the hanger 6 are provided the pipes 92, which are hollow members for discharging the treatment solution. The pipes 92 are supplied with the treatment solution by a pump 94. A filter 95 is provided in a supply path between the pump 94 and the pipes 92. Accordingly, clean treatment solution is always discharged toward the workpiece 4, and the quality of the surface treatment can be improved. Co-deposition of foreign substances especially on the plating film in the plating treatment can be prevented. The treatment solution differs depending on the surface treatment chamber. In this embodiment, cleaning solution, desmear solution, pretreatment solution, plating solution, or the like are used.

A hole 90 (treatment solution discharge port) of the pipe 92 is provided facing upward at a predetermined angle (e.g., 45 degrees). Thus, the treatment solution is discharged obliquely upward from the pipe 92 and reaches the hanger 6. Note that the hole 90 is preferably oriented in the range of 5 to 85 degrees to the horizontal direction. The hole 90 of the pipe 92 is provided at predetermined intervals (e.g., 10 cm) and perpendicular to a paper plane.

The treatment solution ejected from the hole 90 of the pipe 92 contacts the flat plate 46 (see FIG. 3) of the treatment solution receiving member 45 and flows downward. A semicircular projected section 48 is provided in the downward direction, and the treatment solution flowing along the surface flows in at a near-perpendicular angle to the workpiece 4. Accordingly, it is possible to prevent the treatment solution adhering to the surface of the workpiece 4 from being washed off more than necessary.

The treatment solution, then, flows along the surface of the workpiece 4, and the surface treatment is performed.

The fallen treatment solution is collected in a tank 96 provided at the bottom of the surface treatment chamber P6. The pump 94 sends the collected treatment solution again to the pipe 92 for use.

During the surface treatment described above, the swing mechanism 86 (which can be composed of an electric actuator or the like) shown in FIG. 8 swings the placing stand 84 in the direction of arrows C and D. Accordingly, the hanger 6 and the workpiece 4 are similarly swung.

As described above, since the holes 90 of the pipe 92 are provided at predetermined intervals, if the workpiece 4 remains stationary, the treatment with the treatment solution may be uneven. Therefore, in this embodiment, swing mechanism 86 swings the workpiece 4 to prevent the unevenness due to uneven flow of the treatment solution. Note that the movement by the swing mechanism is preferably greater than the intervals between the holes 90 of the pipe 92.

From the time the workpiece 4 is loaded into the surface treatment chamber P6 until the surface treatment is completed, the electric actuator 18 and the housing box body 30 can be moved in the direction of arrows A and B (see FIG. 8) to move other workpieces 4. Accordingly, the treatment efficiency can be improved.

When the treatment of the workpiece 4 introduced into the surface treatment chamber P6 is completed, the shutter 89 is opened to open the inlet/outlet 80, as shown in FIG. 10A. Next, the actuator 18 and the housing box body 30 are moved in the direction of arrows A and B shown in FIG. 8 to a position where the workpiece 4 can be removed from the surface treatment chamber P6 (the gap 78 of the housing box body 30 and the gap 82 of the surface treatment chamber P6 are aligned). That is, they are moved to a position as shown in FIG. 8.

The electric actuator 18 moves the hanger holding chuck 26 in the arrow D direction to pinch the hanger 6 holding the workpiece 4 and move it again in the arrow C direction to return the workpiece 4 to the housing box body 30.

Note that there is a risk that the treatment solution will drip from the workpiece 4 after treatment and contaminate the factory. However, in this embodiment, the housing box body 30 is provided, so the treatment solution can be collected at its bottom.

Next, the electric actuator 18 and the housing box body 30 are moved in the arrow A direction to the position of the next surface treatment chamber P7. The workpiece 4 is also introduced into the surface treatment chamber P7 by the electric actuator 18 in the same manner as described above.

However, the placing stand 84 is not provided in the surface treatment chamber P7. Thus, in the state where the hanger 6 holding the workpiece 4 is held by the hanger holding chuck 26, the treatment is performed by applying the treatment solution. The electric actuator 18 and the housing box body 30 must remain in their positions until the treatment is completed. Therefore, it is suitable for the surface treatment that is completed in a relatively short time. For example, washing with water.

The same treatment is repeated for the different surface treatment chambers, and when treatment in the surface treatment chamber Pn is completed, the workpiece 4 is carried to the last surface treatment chamber Pm for treatment.

### 1.5 Treatment of workpiece 4 in treatment chamber Pm

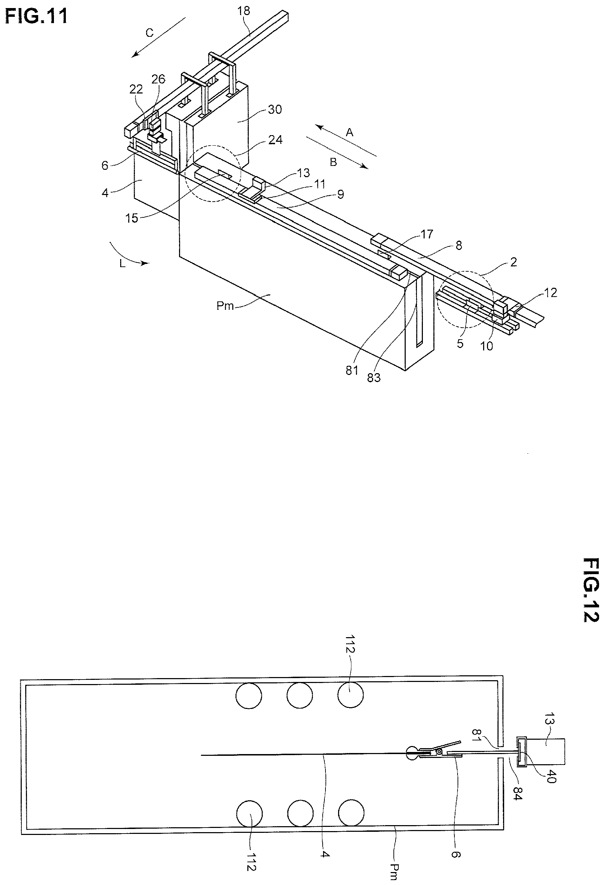

FIG. 11 shows a state in which the workpiece 4 that has been treated in the surface treatment chamber Pn is moved in the arrow C direction and positioned at the end of the electric actuator 18. In this position, the hanger holding chuck 26 is rotated in the arrow L direction. FIG. 11 shows a state in which the rotation has been completed. Due to the rotation, the workpiece 4 is oriented such that it can be introduced into the surface treatment chamber Pm.

In this state, the housing box body 30 and the electric actuator 18 as a whole are moved in the arrow B direction to move the workpiece 4 to the intermediate deliver position 24. When it reaches the intermediate deliver position 24, the hanger holding chuck 26 is lowered and the hanger 6 holding the workpiece 4 is left on the placing stand 15.

When the hanger 6 is placed on the placing stand 15, the electric actuator 9 moves the hanger holding chuck 13 fixed to the slider 11 in the arrow A direction. When the hanger holding chuck 13 reaches the top of the placing stand 15, the hanger holding chuck 13 is lowered, the hanger 6 is pinched and held, and the hanger holding chuck 13 is raised.

Next, the electric actuator 9 moves the hanger 6 holding the workpiece 4 in the arrow B direction. Note that the gap 81 is provided in the upper part of the surface treatment chamber Pm to avoid interference with the hanger 6 during its movement.

FIG. 12 shows a cross-sectional view of the surface treatment chamber Pm that performs the drying treatment. The hanger 6, held by the hanger holding chuck 13 with the top plate 40 pinched therebetween, is introduced into the surface treatment chamber Pm through the gap 81, and the workpiece 4 is held in the hanger 6. Heaters 112 are provided on both side walls of the surface treatment chamber Pm to dry the workpiece 4.

Because drying as the final process takes time, the surface treatment chamber Pm is configured longer than the other surface treatment chambers P1 to Pn, as shown in FIG. 11. In this embodiment, the surface treatment chamber Pm is arranged perpendicular to the other surface treatment chambers P1 to Pn. This allows an arrangement without wasting space.

The workpiece 4 can be slowly moved in the arrow B direction in the surface treatment chamber Pm by the electric actuator 9. When the hanger 6 reaches the placing stand 17, the hanger holding chuck 13 is lowered and opened, and the hanger 6 is left on the placing stand 17.

Subsequently, by the electric actuator 8, the hanger holding chuck 10 is moved to the top of the placing stand 17, lowered to pinch and hold the left hanger 6, and raised. In addition, the hanger 6 holding the workpiece 4 is moved in the arrow B direction and left on the placing stand 5 at the workpiece attachment/detachment area 2.

The workpiece 4 held by the hanger 6 placed on the placing stand 5 is removed by the robot arm 64 in the reverse order of the attachment.

As described above, the surface treatment can be performed on the workpiece 4.

### 1.6 Cleaning treatment of hanger 6

By performing the above surface treatment, the hanger 6 is also treated (e.g., plated) and unwanted materials accumulate on the surface. A cleaning treatment is to remove this with chemicals or the like.

The surface treatment chambers P1 to P5 in FIG. 1 are for the cleaning treatment. In these treatments, the hanger 6, which does not hold the workpiece 4, is moved in and out of the surface treatment chambers P1 to P5 by the electric actuator 18.

As described above, in this embodiment, the surface treatment chambers P1 to P5 for the hanger cleaning treatment can have the same size and structure as the other surface treatment chambers P6 to Pn or the like, to achieve commonality.

### 1.7 Additional Remarks

(1) In the above embodiment, the electric actuator 18 is fixed on the housing box body 30. However, as shown in FIG. 14, the housing box body 30 may not be provided in the inter-treatment-chamber movement mechanism (driving roller 72), but instead an L-shaped structure 31 may be provided so that the electric actuator 18 may be fixed to this.

In this case, in order to prevent the treatment solution from leaking outside from the workpiece 4, a treatment solution recovery pan 33 as a collection part may be provided in the inter-treatment-chamber movement mechanism (driving roller 72).

In the above embodiment, the electric actuator 18 (loading/unloading mechanism) is fixed on the housing box body 30. However, the electric actuator 18 and arm 70 may not be provided on the housing box body 30, but instead the placing stand 84 may be provided on the housing box body 30, and the electric actuator 18 and arm 70 may be provided on the surface treatment chambers P1, P2 ... Pn. In this case, the electric actuator 18 can perform both the operation of moving the treatment target in and out of the surface treatment chamber and the operation of swinging the treatment target within the surface treatment chamber, thereby improving efficiency.
(2) In the above embodiment, the shutters 89 are provided at the inlet/outlet 80 of surface treatment chambers P1 to Pn. This has the effect of preventing scattering of the treatment solution and maintaining the temperature inside the surface treatment chamber.

However, the shutter 89 may not be provided if scattering of the treatment solution to the outside is not a problem, if the surface treatment chamber is deep enough to prevent the treatment solution from scattering outside, or if the treatment solution is not used in the surface treatment chamber.
(3) In the above embodiment, the housing box body 30 is not provided with the shutter 89. However, the housing box body 30 may also be provided with the shutter 89.
(4) In the above embodiment, the electric actuator 18 is used as the loading/unloading mechanism. The electric actuator 18 generates less dust when driven, and can reduce surface treatment defects of the workpiece 4 due to dust.

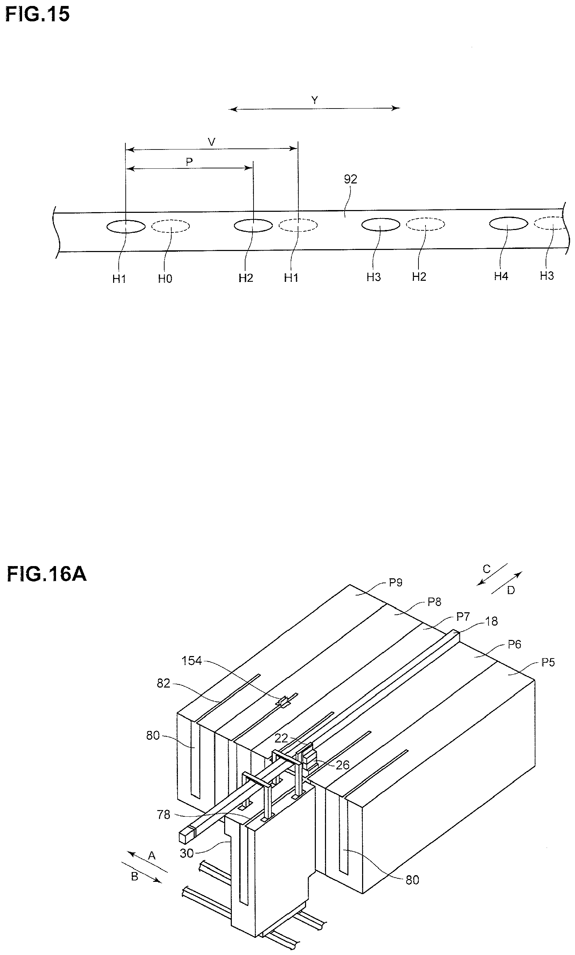

However, the drive mechanism such as rack and pinions or gears may be used.
(5) In the above embodiment, the swing mechanism 86 swings the hanger 6 holding the workpiece 4 (hanger holding chuck 26). However, as shown in FIG. 15, the pipe 92 may be swung by an electric actuator or the like.

FIG. 15 shows the pipe 92 appearing as a vertical section (longitudinal cross section) of the surface treatment chamber. The pipe 92 is provided with long holes H0 to Hn for discharging the treatment solution. These long holes H0 to Hn are provided at the predetermined intervals P.

The pipe 92 is swung in the arrow Y direction by a swing mechanism (not shown). Note that the treatment solution is supplied to the pipe 92 through a flexible pipe. In the figure, for long holes H0 to H4, the leftmost position during swinging is indicated by a solid line, and the rightmost position is indicated by a dashed line. Therefore, a swing range is indicated by V.

In this embodiment, the swing range V is made larger than the predetermined interval P of the long hole H. Accordingly, the treatment solution can be evenly discharged onto the stationary workpiece 4.

Not that both the workpiece 4 and the pipe 92 may be swung.
(6) In the above embodiment, the apparatus of the method in which the treatment solution is flowed down the workpiece 4 has been described. However, the method of immersing the workpiece 4 in the treatment solution can also be applied.

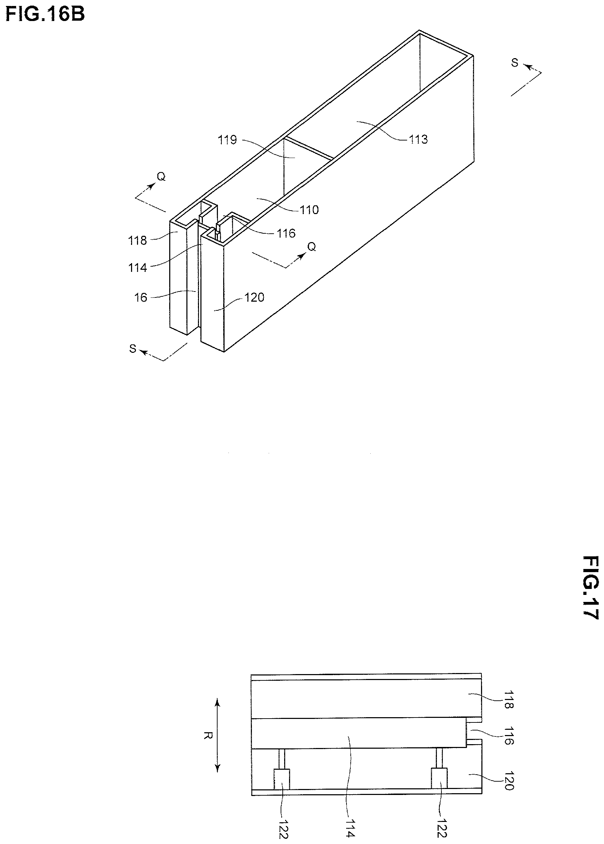

FIG. 16A shows a configuration example of the treatment chambers P5 to P9 in the case of an immersion system (the same configuration is used for the other treatment chambers). FIG. 16B shows a view in which the upper part of the treatment chamber is cut off to reveal the inside. The treatment chamber P is provided with a front chamber 110 and an accumulation chamber 113. The front chamber 110 is a room for immersing the workpiece 4 into the treatment solution. The accumulation chamber 113 accumulates the treatment solution and is a room for supplying the treatment solution to the front chamber 110 when necessary.

A partition wall 119 is provided between the accumulation chamber 113 and the front chamber 110. The partition wall 119 is provided with an open/close valve (not shown) at its lower part, and the front chamber 110 can be filled with the treatment solution from the accumulation chamber 113 by opening this open/close valve with a control circuit. In this way, the front chamber 110 can be filled with the treatment solution more quickly than when the treatment solution is directly supplied to the front chamber 110 by a pump or the like.

Projected sections 118 and 120 are provided at the inlet/outlet 16 of the front chamber 110, and a workpiece passage 116 is formed therebetween. The workpiece passage 116 is provided with a shutter 114 that can be opened and closed under the control of the control circuit. After the workpiece 4 is introduced into the front chamber 110, the shutter 114 is moved by a drive mechanism (not shown) in the projected section 120 (controlled by a control circuit) from the gap of the projected section 120 to the gap of the projected section 118 to close the workpiece passage 116. Accordingly, even if the front chamber 110 is filled with the treatment solution, the inlet/outlet 16 is kept watertight. By filling the front chamber 110 with the treatment solution, the surface treatment is performed to the workpiece 4.

After the treatment is completed, the control circuit opens a discharge valve (not shown) provided at the bottom of the front chamber 110 to discharge the treatment solution into a storage tank (not shown). Accordingly, after the treatment solution in the front chamber 110 is removed, the shutter 114 is opened under the control of the control circuit to take out the workpiece 4.

Note that the treatment solution accumulated in the storage tank is returned to the accumulation chamber 113 by a pump or the like.

FIG. 17 shows the Q-Q cross section of FIG. 16B. A cylinder 122 is provided in the projected section 120 and connected to the shutter 114. Thus, by controlling the cylinder 122, the shutter 114 can be moved in the arrow R direction to open and close the workpiece passage 116.

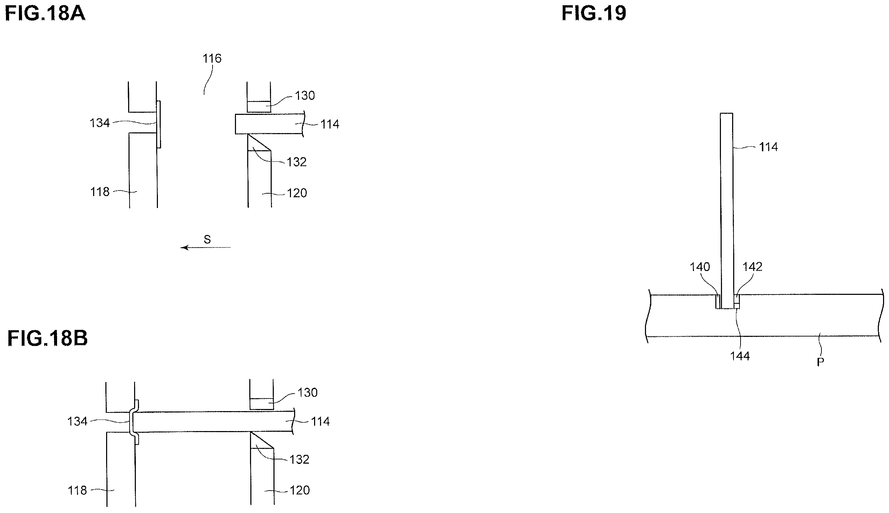

FIG. 18A and 18B show views of the shutter 114 viewed from above. FIG. 18A is a state in which the shutter 114 is open. A hard resin 130 and a soft resin 132 are provided on both sides of the gap in the projected section 120. Accordingly, the shutter 114 can adhere to both of these resins to maintain a watertight state.

FIG. 18B shows a state in which the shutter 114 is moved in the arrow S direction and is closed. The gap of the projected section 118 is provided with a soft resin film 134. Thus, since the shutter 114 presses and deforms this, it becomes watertight with the shutter 114.

FIG. 19 shows the vicinity of the shutter 114 in the S-S cross section of FIG. 16B. The floor of the surface treatment chamber P is provided with a sliding groove 144 for sliding the shutter 114. One wall of the sliding groove 144 is provided with a hard resin 140 and the other wall with a soft resin 142. Thus, the hard resin 140 improves the slidability of the shutter 114, and the soft resin 142 can improve watertightness.

As described above, when the shutter 114 is closed, the front chamber 110 is closed watertight. Therefore, the treatment solution can be introduced into the front chamber 110 from the accumulation chamber 113 to raise the liquid level enough to immerse the workpiece 4.

When using this surface treatment chamber P6, the hanger 6 (holding the workpiece 4) held by the hanger holding chuck 26 is moved in the arrow D direction by the electric actuator 18 and introduced into the front chamber 110, as shown in FIG. 16A. In this state, the shutter 114 is closed. After that, the open/close valve of the partition wall 119 is opened to introduce the treatment solution into the front chamber 110, and when the liquid level rises to the point where the workpiece 4 is sufficiently immersed, the open/close valve is closed. In this state, the surface treatment of the workpiece 4 is performed.

When the surface treatment is completed, the release valve of the front chamber 110 is opened and the treatment solution is discharged from the front chamber 110. When the discharge is finished, the release valve is closed. The open/close valve of the partition wall 119 and the release valve of the front chamber 110 constitute a liquid level change processing part.

Next, the shutter 114 is opened, the hanger 6 is moved by the electric actuator 18, and the workpiece 4 is taken out from the front chamber 110 and returned to the housing box body 30. Thus, the surface treatment in the surface treatment chamber P is performed.

Each of the above control treatments is performed by a control circuit having a CPU (provided in the housing box body 30 but not shown). The housing box body 30 and the electric actuator 18 are then moved in the direction of arrows A and B to send the workpiece 4 into the next surface treatment chamber, as described above.

In the above description, the workpiece 4 is moved horizontally and led to the treatment chamber in the same manner as in the flow-down system. However, the ceiling of the front chamber 110 may be removed and a mechanism to vertically move the hanger holding chuck 26 may be provided to introduce the workpiece 4 from the top.

As shown in FIG. 16A, a placing stand 154 may be provided at the top of the surface treatment chamber P. The workpiece 4 held by the hanger 6 is introduced from the housing box body 30 into the front chamber 110 of the surface treatment chamber P8 by the electric actuator 18. The hanger 6 is placed on the placing stand 154 provided on the ceiling of the surface treatment chamber P8. Accordingly, the electric actuator 18 and the housing box body 30 can move to another location to perform other treatment.

Instead of fixing this placing stand 154 to the ceiling of the surface treatment chamber P, it may be fixed to the swing mechanism 86 as shown in FIG. 8 to be swung during treatment.

Once the surface treatment is completed, the treatment solution is collected by the hanger holding chuck 26, which is moved by the electric actuator 18.

As described above, the efficiency can be improved by providing the placing stand 154 on the side of the surface treatment chamber P.

Each of the above control treatments of the liquid level or the like, is performed by a control circuit having a CPU (provided in the surface treatment chamber P but not shown).

In the above example, the accumulation chamber 113 in which the treatment solution is accumulated is provided. However, instead of providing this, the treatment solution may be supplied to the front chamber 110 by a pump or the like. In addition, the treatment solution may be discharged from the front chamber 110 by the pump or the like. Such a pump constitutes the liquid level change processing part.

Furthermore, depending on the type of the surface treatment, the surface treatment chamber of the immersion system and the surface treatment chamber of the flow-down system may be used together.

(7) In the above embodiment, the workpieces 4 are treated in all the surface treatment chambers P5 to Pn, except for the treatment chambers P1 to Pn for hanger cleaning.

However, various types of surface treatment chambers may be provided, and only the necessary surface treatment chamber may be selected for treatment according to the treatment required for the workpiece 4. Such a selection is especially effective not for pretreatment but for main treatment (plating, desmear, etc.). According to this embodiment, this can be easily achieved by controlling the movement of the electric actuator 18 with the control circuit.

In addition, a plurality of surface treatment chambers may be provided to perform the surface treatment that requires a longer treatment time than other surface treatments. Accordingly, the workpieces 4 can be treated simultaneously in the plurality of surface treatment chambers, and the surface treatment requiring a longer treatment time does not become a bottleneck.
(8) In the above embodiment, only one electric actuator 18 is provided to move the workpiece 4 in and out of the surface treatment chambers P1 to Pn.

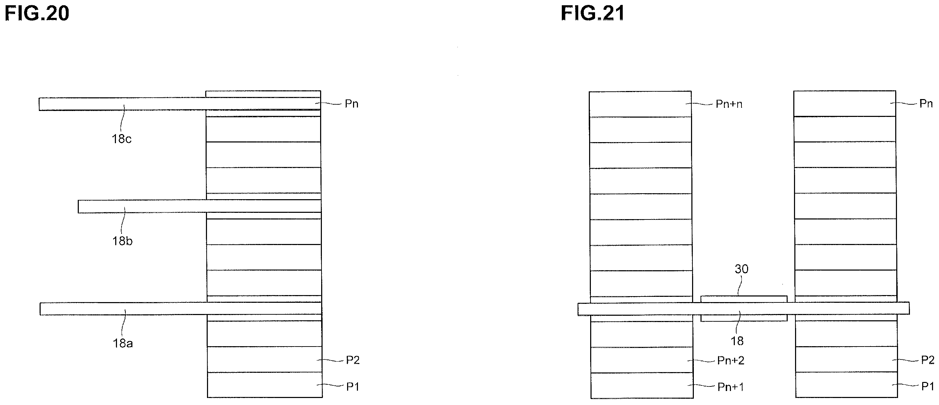

However, as shown in FIG. 20, a plurality of independently movable electric actuators 18a, 18b, 18c may be provided. Thus, by providing the plurality of electric actuators, each of them can perform a necessary treatment, so a plurality of workpieces 4 can be efficiently processed in parallel.

The electric actuator 18b, which does not need to receive and deliver the workpieces 4 at the outgoing deliver position 14 and intermediate deliver position 24, may be configured to be short.
(9) In the above embodiment, the surface treatment chambers P1 to Pn are arranged in a row.

However, as shown in FIG. 21, the surface treatment chambers P1 to Pn+n may be arranged in two rows, and the electric actuator 18 may be provided across the surface treatment chambers on both sides. The workpiece 4 is introduced into either the left or right surface treatment chamber by the electric actuator 18.

With such a configuration, even if the number of surface treatment chambers increases, the moving distance of the electric actuator 18 can be shortened to improve efficiency.

The surface treatment chambers may be arranged in three or more rows.

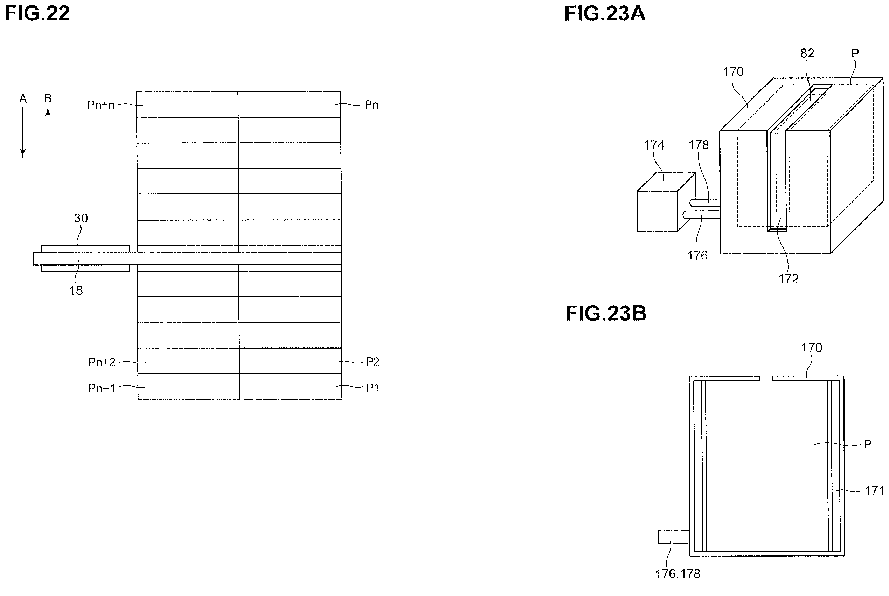

Furthermore, as shown in FIG. 22, a plurality of rows of the surface treatment chambers P1 to Pn+n may be provided on one side. The surface treatment chambers P1 to Pn are arranged in the first row, and the surface treatment chambers Pn+1 to Pn+n are arranged in the second row. When performing the treatment in the second row of surface treatment chambers after the treatment in the first row of surface treatment chambers, it is not necessary to move the entire electric actuator 18 in the direction of arrows A and B. (10) The following configuration may be added to the surface treatment chamber P of the above embodiment.

As shown in FIG. 23A, a water jacket 170, which is a hot water circulation mechanism, may be provided. As shown in the cross section of FIG. 23B, the water jacket 170 covers the surface treatment chamber P and has a flow path 171 to flow hot water around it. Hot water from a hot water supply section 174 is supplied through a supply pipe 176 and discharged through a discharge pipe 178 for circulation. Accordingly, the air in the surface treatment chamber P can be warmed to appropriately perform desmear treatment or the like that requires a high-temperature treatment solution. Note that an inlet/outlet 172 is provided for introducing workpieces. (11) The following configuration may be added to the surface treatment chamber P of the above embodiment.

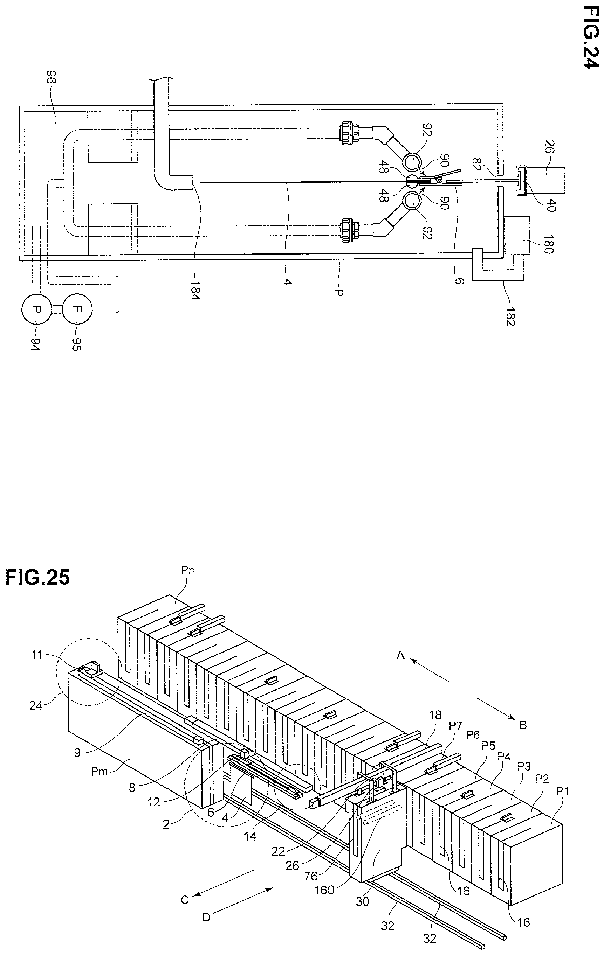

As shown in FIG. 24, a high-temperature air supply section 180 is provided on the top of the surface treatment chamber P, and high-temperature air is supplied to the upper part of the surface treatment chamber P through a pipe 182. On the other hand, a negative pressure suction port 184 is provided in the lower part of the surface treatment chamber P (above the circulating solution tank 96). In this embodiment, the negative pressure suction port 184 is provided directly below the workpiece 4. The negative pressure suction port 184 is connected to a room that is negatively pressurized by a pump or the like.

Thus, the air flow from top to bottom can stabilize the workpiece 4. This is especially effective when the workpiece 4 is a thin plate.

In addition, since high-temperature air is supplied from the upper part, the temperature of the surface treatment chamber can be kept high.

The surface treatment chamber, except for the immersion system of each embodiment, may be supplied with non-high-temperature air from top to bottom by applying the embodiment shown in FIG. 24. In this case, it is particularly useful for stabilizing the position of an ultra-thin substrate of 100 µm or less.
(12) In the above embodiment, the shutter 89 is provided at the inlet/outlet 16 to prevent the treatment solution from scattering outside when the treatment solution is discharged. However, a partition plate having an inlet/outlet in the similar shape to the inlet/outlet 16 may be provided at a predetermined distance from the inlet/outlet 16 of the surface treatment chamber P to separate the front side as the front chamber and the back side as the discharge chamber. If the treatment solution is discharged from the discharge chamber, scattering from the inlet/outlet 16 can be suppressed by the effect of the partition plate and the distance from the inlet/outlet 16, and the shutter 89 can be omitted.
(13) In the above embodiment, as shown in FIG. 9, the position where the treatment solution is discharged and brought into contact is the part above the semicircular projected section 48 of the flat plate 46 of the hanger 6. However, the position may be brought into contact with the vicinity of the boundary between the flat plate 46 and the projected section 48. Accordingly, the falling speed of the treatment solution along the surface of the workpiece 4 can be reduced to ensure that the surface treatment is performed.
14) Each of the above modifications can be combined with other embodiments and modifications thereof as long as they do not contradict the essence thereof.

### 2. Second Embodiment

### 2.1 Entire configuration

FIG. 25 shows an entire configuration of a surface treatment apparatus according to the second embodiment. The basic configuration is the same as that of the first embodiment, such that surface treatment chambers P1, P2 ...and Pn (second surface treatment chambers) arranged in a row, and an electric actuator 18 (second movement mechanism) and a housing box body 30 are moved in the direction of arrows A and B by a driving roller 72 (first movement mechanism). A plurality of second surface treatment chambers for performing the same treatment may be provided according to the difference in treatment time of each treatment.

A characteristic feature of this embodiment is that a pipe 160 for discharging treatment solution is provided inside the housing box body 30. That is, in this embodiment, the housing box body 30 also functions as the surface treatment chamber (a first surface treatment chamber or a moving surface treatment chamber).

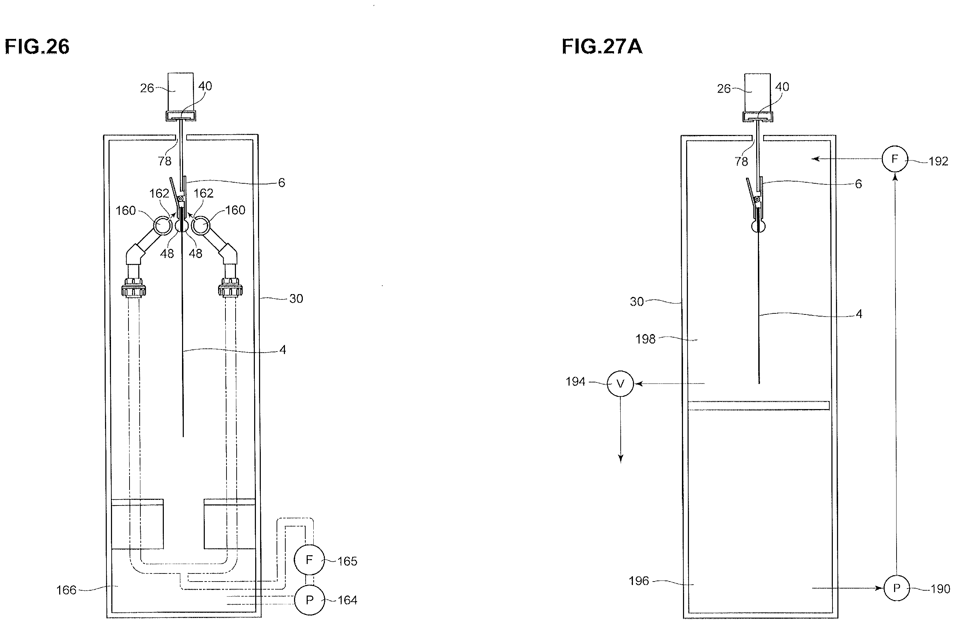

FIG. 26 shows a cross-sectional view of the housing box body 30. The treatment solution is discharged from the pipe 160 having long holes 162 provided at predetermined intervals. The discharged treatment solution contacts a hanger 6 and flows over the surface of a workpiece 4 through the hanger 6.

A circulating liquid tank (circulating solution reservoir) 166 is provided at the bottom of the housing box body 30 to store the treatment solution that has flowed down. This treatment solution is sent to the pipe 160 again by a pump 164 and discharged. A filter 165 is provided in a supply path between the pump 164 and the pipes 160.

These configurations are similar to those in FIG. 9 of the first embodiment.

It is similar to the first embodiment in that it is preferable to swing the pipe 160 or the workpiece 4 in a direction perpendicular to the paper plane. Note that the workpiece 4 can be swung by the electric actuator 18.

With such a configuration, the surface treatment can be performed on the workpiece 4 in the state of being placed in the housing box body 30 to improve efficiency. This is particularly efficient because the surface treatment can be performed while moving the housing box body 30. Furthermore, by attaching a filter (not shown) to the piping between the circulating pump 164 and the pipe 160, a clean treatment solution always can be supplied to a treatment target, and co-deposition of foreign substances especially on the plating film can be prevented in the surface treatment.

### 2.2 Additional Remarks

(1) In the above embodiment, the surface treatment is performed in the housing box body 30 that moves between the surface treatment chambers P1, P2, ...and Pn.

However, the surface treatment chambers P1 to Pn may not be provided, but instead only the housing box body 30 that performs the surface treatment may be provided. Different surface treatments can be performed by changing the treatment solution, and the surface treatment can be completed while the housing box body 30 is moved and transported to the desired location. For example, the surface treatment can be completed while moving from process Ato process B to improve efficiency. (2) In the above embodiment, the shutter 89 as shown in FIG. 10 is not provided.

However, the same shutter 89 may be provided at either one of inlet/outlet 76 or both of the inlet/outlet 76. This prevents scattering of the treatment solution.
(3) In the above embodiment, the housing box body 30 is provided with a configuration for discharging the treatment solution by a flow-down system.

However, as shown in FIG. 27A, a configuration may be provided in which the surface treatment is performed by an immersion system. In the lower part of the housing box body 30, a treatment solution accumulation chamber 196 is provided, and the treatment solution is accumulated therein. In the upper part, an upper chamber 198 is provided to guide the workpiece 4.

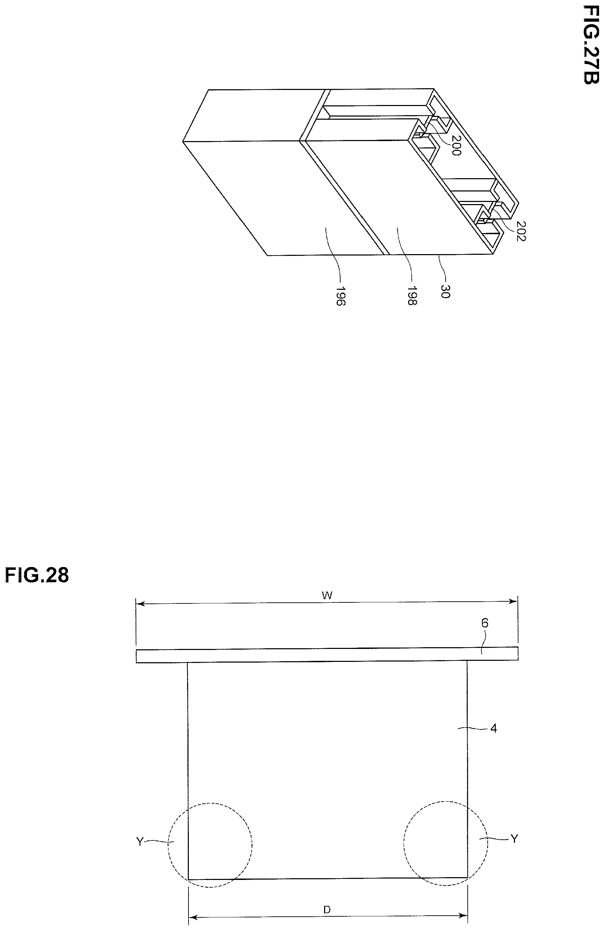

FIG. 27B shows a view in which the upper part of the housing box body 30 is cut off to show the inside. On both sides of the upper chamber 198 are provided shutters 200 and 202 which are similarly configured as shown in FIG. 16B.

One of the shutters 200 and 202 is opened to introduce the workpiece 4 into the upper chamber 198. Both shutters 200 and 202 are, then, closed. Next, the treatment solution in the treatment solution accumulation chamber 196 shown in FIG. 27A is sucked up by a pump 190 and sent into the upper chamber 198 through a filter 192. When the liquid level reaches the point where the workpiece 4 is completely immersed, the pump 190 is stopped to stop sending the treatment solution.

When the surface treatment is completed, a discharge valve 194 is opened to discharge the treatment solution in the upper chamber 198 to the outside. When the discharge is completed, one of the shutters 200 and 202 is opened to move the workpiece 4 from the housing box body 30 to the surface treatment apparatus P6 to Pn or the like.

The above control treatments of the liquid level or the like is performed by a control circuit having a CPU (provided in the housing box body 30 but not shown).

Note that in the above, the used treatment solution is discharged. However, the treatment solution discharged from the discharge valve 194 may be returned to the treatment solution accumulation chamber 196 for reuse.
4) Each of the above modifications can be combined with other embodiments and modifications thereof as long as they do not contradict the essence thereof.

In particular, in this embodiment, because the housing box body 30 also serves as the surface treatment chamber, the modification regarding the surface treatment chamber P in the first embodiment can be applied to the housing box body 30 in the second embodiment.

### 3. Other

In the above embodiment, the hanger 6 with a width slightly wider than the width of the workpiece 4 is used.

However, in the flow-down system, when the treatment solution hung on the hanger 6 falls along the workpiece 4, it tries to gather in the central portion due to surface tension. As a result, the treatment solution does not sufficiently flow in the vicinity of the regions Y indicated by the dashed lines in FIG. 28, and uneven treatment may occur.

Therefore, if the workpiece 4 is substantially square, it is recommended that the width W of the hanger 6 be widened by at least 1/5 of its width D, so that the treatment solution covers the entire width W of the hanger 6. Accordingly, the amount of treatment solution which flows along the ends of the workpiece 4 is increased, and the above problem can be resolved.

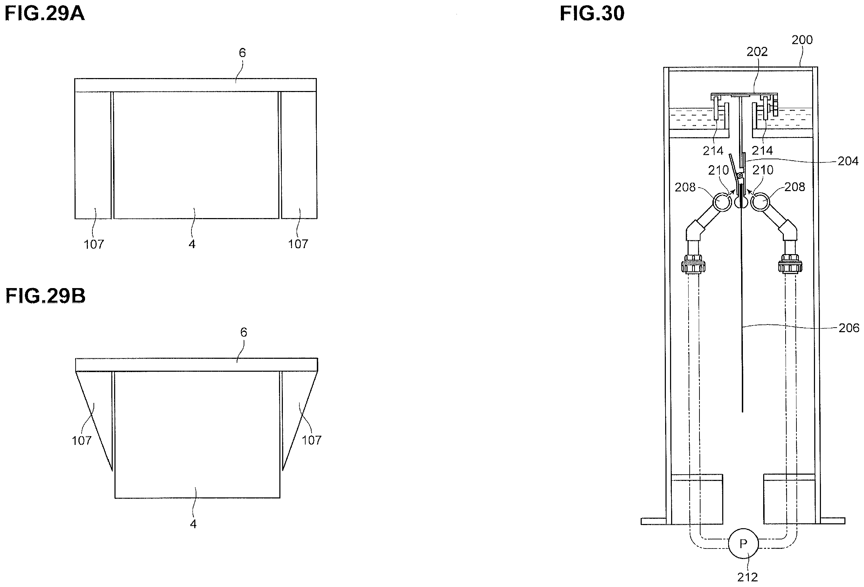

In addition, as shown in FIG. 29A, the hanger 6 with dummy plates 107 made of thin metal plates fixed to both sides of the workpiece 4 may be used.

Furthermore, as shown in FIG. 29B, dummy plates 107 obliquely formed toward the lower end may be provided.

These dummy plates 107 ensure the supply of the treatment solution at the ends.

### 4. Clauses defining invention

The following clauses define feature combinations according to the present invention.
1. A surface treatment apparatus comprising: a plurality of surface treatment chambers which has an inlet/outlet for introducing/discharging a treatment target and performs a surface treatment on the treatment target; a holding member for holding the treatment target; a loading/unloading mechanism for taking the treatment target held by the holding member in and out of the surface treatment chamber through the inlet/outlet of the surface treatment chamber; an inter-treatment-chamber movement mechanism for moving the treatment target held by the holding member in a state where the treatment target is taken out of the surface treatment chamber by the loading/unloading mechanism, in an arrangement direction of the surface treatment chambers.
2. The surface treatment apparatus according to clause 1, characterized in that the inter-treatment-chamber movement mechanism comprises a moving surface treatment chamber having an inlet/outlet for introducing and discharging the treatment target and performing the surface treatment on the treatment target, and moves the moving surface treatment chamber in which the treatment target is introduced.
3. The surface treatment apparatus according to clause 1 or 2, characterized in that the surface treatment chamber and/or the moving surface treatment chamber comprises a treatment solution discharging section for discharging a treatment solution onto the holding member or the treatment target in a state of not being in immersed in the treatment solution to allow the treatment solution to flow over a surface of the treatment target held by the holding member.
4. The surface treatment apparatus according to clause 3, characterized in that the treatment solution discharging section comprises a hollow member having treatment solution discharge ports provided at predetermined intervals, and the treatment solution discharging section further comprises a swing section for swinging the hollow member in an arrangement direction of the treatment solution discharge ports beyond the predetermined intervals.
5. The surface treatment apparatus according to claim 1 or 2, characterized in that the surface treatment chamber immerses the treatment target in the treatment solution to perform the surface treatment thereon.
6. The surface treatment apparatus according to claim 5, characterized in that the surface treatment chamber comprises a liquid level change processing part for switching between a state where the treatment target is immersed in the treatment solution and a state where the treatment target is not immersed in the treatment solution.
7. The surface treatment apparatus according to clause 6, characterized in that the surface treatment chamber comprises: a front chamber; and an accumulation chamber switchably configured to be communicated with or independent of the front chamber, the accumulation chamber being filled with the treatment solution and the liquid level change processing part switching the liquid level state of the front chamber.
8. The surface treatment apparatus according to any one of clauses 1 to 7, characterized in that the surface treatment apparatus further comprises a collection part for collecting the treatment solution adhering to the treatment target in the state of being out of the surface treatment chamber by the loading/unloading mechanism and falling down.
9. The surface treatment apparatus according to any one of clauses 1 to 8, characterized in that the surface treatment chamber and/or moving surface treatment chamber comprises a shutter for opening/closing the inlet/outlet.
10. The surface treatment apparatus according to any one of clauses 1 to 9, characterized in that the surface treatment apparatus further comprises a housing box body which covers the treatment target in the state of being out of the surface treatment chamber by the loading/unloading mechanism and is moved by the inter-treatment-chamber movement mechanism.
11. The surface treatment apparatus according to clause 10, characterized in that the housing box body comprises a shutter through which the treatment target is taken in/out.
12. The surface treatment apparatus according to any one of clauses 1 to 11, characterized in that the loading/unloading mechanism is an actuator.
13. The surface treatment apparatus according to any one of clauses 1 to 12, characterized in that a plurality of the loading/unloading mechanisms is provided, and each loading/unloading mechanism is configured to be movable independently in the surface treatment chamber arrangement direction.
14. The surface treatment apparatus according to any one of clauses 1 to 13, characterized in that the surface treatment chambers are provided on both sides of the moving direction of the inter- treatment-chamber movement mechanism.
15. The surface treatment apparatus according to any one of clauses 1 to 14, characterized in that the surface treatment chambers are arranged in a plurality of rows, and the loading/unloading mechanism moves the treatment target held by the holding member across the plurality of rows of the surface treatment chambers.
16. The surface treatment apparatus according to any one of clauses 1 to 15, characterized in that a plurality of surface treatment chambers comprises: a plurality of surface treatment chambers for performing a main treatment and a plurality of surface treatment chambers for performing pre-treatment of the main treatment, some of the plurality of surface treatment chambers for a different main treatment, further comprising: a control section that controls the inter-treatment-chamber movement mechanism, the control section selecting and moving a necessary plurality of surface treatment chambers among the plurality of surface treatment chambers, according to the required treatment content for the treatment target, to perform a treatment on the treatment target.
17. The surface treatment apparatus according to any one of clauses 1 to 16, characterized in that the plurality of surface treatment chambers comprises surface treatment chambers that perform the same treatment, further comprising: a control section that controls the inter-treatment-chamber movement mechanism, wherein the control section moving the different treatment target in parallel in a surface treatment chamber that performs the same treatment based on the treatment time in each surface treatment chamber to perform a treatment on the treatment target.
18. A surface treatment apparatus comprising: a holding member for holding a treatment target; a first surface treatment chamber for performing a surface treatment on a treatment target held by the holding member; and a first movement mechanism for moving the surface treatment chamber with the treatment target.
19. The surface treatment apparatus according to clause 18, further comprising: a plurality of second surface treatment chambers provided in the moving direction of the first movement mechanism that has an inlet/outlet for introducing and discharging a treatment target and performs a surface treatment on the treatment target; and a second movement mechanism for moving the treatment target held by the holding member in and out of the second surface treatment chamber through the inlet/outlet of the second surface treatment chamber.
20. The surface treatment apparatus according to clause 18 or 19, characterized in that the first surface treatment chamber or the second surface treatment chamber comprises a treatment solution discharging section for discharging a treatment solution onto the holding member or the treatment target in a state of not being in immersed in the treatment solution to allow the treatment solution to flow over a surface of the treatment target held by the holding member.
21. The surface treatment apparatus according to clause 20, characterized in that the treatment solution discharging section comprises a hollow member having treatment solution discharge ports provided at predetermined intervals, further comprising a swing section for swinging the hollow member in an arrangement direction of the treatment solution discharge ports beyond the predetermined interval.
22. The surface treatment apparatus according to clause 18 or 19, characterized in that the first surface treatment chamber or the second surface treatment chamber immerses the treatment target in the treatment solution to perform the surface treatment thereon.
23. The surface treatment apparatus according to clause 22, characterized in that the first surface treatment chamber or the second the surface treatment chamber comprises a liquid level change processing part for switching between a state where the treatment target is immersed in the treatment solution and a state where the treatment target is not immersed in the treatment solution.
24. The surface treatment apparatus according to clause 23, characterized in that the first surface treatment chamber or the second surface treatment chamber comprises: a front chamber; and an accumulation chamber switchably configured to be communicated with or independent of the front chamber, the accumulation chamber being filled with the treatment solution and
   the liquid level change processing part switching the liquid level state of the front chamber.
25. The surface treatment apparatus according to any one of clauses 18 to 24, characterized in that the first surface treatment chamber or the second surface treatment chamber comprises a shutter for opening/closing the inlet/outlet.
26. The surface treatment apparatus according to any one of clauses 1 to 17, 19 to 25, characterized in that the loading/unloading mechanism or the second movement mechanism moves the holding member in a horizontal direction.
27. The surface treatment apparatus according to any one of clauses 18 to 26, characterized in that the surface treatment apparatus further comprises a circulating solution reservoir that reserves a treatment solution circulating between the first surface treatment chamber and the circulating solution reservoir.
28. The surface treatment apparatus according to any one of clauses 18 to 27, further comprising: a supply solution reservoir that supplies a treatment solution to the first surface treatment chamber; and a discharge part that discharges the treatment solution from the first surface treatment chamber.
29. The surface treatment apparatus according to any one of clauses 18 to 28, characterized in that the second movement mechanism is an actuator.
30. The surface treatment apparatus according to any one of clauses 18 to 29, characterized in that a plurality of the first surface treatment chambers is provided, and each first surface treatment chamber is configured to be movable independently.
31. The surface treatment apparatus according to any one of clauses 18 to 30, characterized in that the second surface treatment chambers are provided on both sides of the moving direction of the first surface treatment chamber.
32. The surface treatment apparatus according to any one of clauses 18 to 31, characterized in that the second surface treatment chambers are arranged in a plurality of rows, and the second movement mechanism moves the treatment target held by the holding member across the plurality of rows of the second surface treatment chambers.
33. The surface treatment apparatus according to any one of clauses 18 to 32, characterized in that the plurality of second surface treatment chambers includes: a plurality of surface treatment chambers for performing a main treatment and a plurality of second surface treatment chambers for performing a pre-treatment of the main treatment, and some of the plurality of second surface treatment chambers perform a different main treatment,further comprising: a control section that controls the first movement mechanism, the control section selecting and moving a necessary plurality of second surface treatment chambers among the plurality of second surface treatment chambers, according to the required treatment content for the treatment target, to perform a treatment on the treatment target.
34. The surface treatment apparatus according to any one of clauses 18 to 33, characterized in that some of the plurality of second surface treatment chambers perform the same treatment, further comprising: a control section that controls the first movement mechanism, the control section moving the different treatment targets in parallel in a second surface treatment chambers that perform the same treatment based on the treatment time in each second surface treatment chamber to perform treatments on the treatment target.
35. The surface treatment apparatus according to any one of clauses 1 to 34, characterized in that the surface treatment apparatus further comprises a hot water circulation mechanism provided around a surface treatment chamber, a first surface treatment chamber, or a second surface treatment chamber.
36. The surface treatment apparatus according to any one of clauses 1 to 35, characterized in that the surface treatment chamber, the first surface treatment chamber, or the second surface treatment chamber comprises a heater provided facing the treatment target.
37. The surface treatment apparatus according to any one of clauses 1 to 36, characterized in that the surface treatment chamber, the first surface treatment chamber, or the second surface treatment chamber is configured to supply air at a temperature higher than room temperature to the upper part and to suck or discharge air in the room from the lower part.
38. A surface treatment apparatus comprising: a discharge chamber having a treatment solution discharging section that discharges a treatment solution onto a treatment target held by a holding member or onto the holding member for allowing the treatment solution to flow over the surface of the treatment target held by the holding member; a front chamber provided adjacent to the discharge chamber; and a front chamber discharge chamber moving means that moves a holding member holding a treatment target at least from the front chamber to the discharge chamber and from the discharge chamber to the front chamber.
39. A surface treatment apparatus comprising: a treatment solution discharging section that discharges a treatment solution onto a treatment target held by a holding member or onto the holding member for allowing the treatment solution to flow over the surface of the treatment target held by the holding member; and a swing section that moves the relative positional relationship between the treatment solution discharging section and the treatment target.
40. The surface treatment apparatus according to clause 39, characterized in that the treatment solution discharging section comprises a hollow member having treatment solution discharge ports provided at predetermined intervals, the surface treatment apparatus further comprises: a swing section for swinging the hollow member in an arrangement direction of the treatment solution discharge ports beyond the predetermined interval.
41. The surface treatment apparatus according to clause 39, characterized in that the treatment solution discharging section comprises a hollow member having treatment solution discharge ports provided at predetermined intervals, the surface treatment apparatus further comprises: a swing section for swinging the holding member holding the treatment target in an arrangement direction of the treatment solution discharge ports beyond the predetermined interval.
42. A holding member for use in a surface treatment which is performed in such manner that a treatment solution is discharged onto a plate-like holding member and used when the treatment solution flows over the surface of a treatment target held by the holding member to perform a surface treatment, characterized in that the holding member is formed to have a lengthened part whose width is at least one fifth longer than that of the treatment target.
43. The holding member according to clause 42, characterized in that the holding member further comprises dummy plates extending downwardly along the both sides of the plate-like treatment target at the lengthened part.
44. A production method of a treatment target on which a surface treatment is performed, comprising the steps of: providing a plurality of surface treatment chambers for performing surface treatments;determining, depending on contents of the surface treatment required for the treatment target, as to which surface treatment chamber and in which order the surface treatment is to be performed; and introducing the treatment targets in turn into the surface treatment chambers for surface treatment based on the determined treatment order.
45. A surface treatment chamber comprising: a casing having an inlet/outlet shaped to be in coincidence with a cross-sectional shape of a treatment target in order to introduce and discharge the treatment target held by the holding member on a side face; and a treatment solution discharging section that is provided in the casing and discharges a treatment solution onto a treatment target held by a holding member or onto the holding member to allow the treatment solution to flow over the surface of the treatment target held by the holding member, characterized in that a top surface of the casing is provided with a gap to avoid an interference of a supporting member that supports the holding member with the casing when taking in and out of the treatment target through the inlet/outlet.

## Claims

1. A surface treatment apparatus comprising:
a plurality of surface treatment chambers which has an inlet/outlet for introducing/discharging a treatment target and performs a surface treatment on the treatment target;
a holding member for holding the treatment target;
a loading/unloading mechanism for taking the treatment target held by the holding member in and out of the surface treatment chamber through the inlet/outlet of the surface treatment chamber;
an inter-treatment-chamber movement mechanism for moving the treatment target held by the holding member in a state where the treatment target is taken out of the surface treatment chamber by the loading/unloading mechanism, in an arrangement direction of the surface treatment chambers.

2. The surface treatment apparatus according to claim 1, **characterized in that**
the inter-treatment-chamber movement mechanism comprises a moving surface treatment chamber having an inlet/outlet for introducing and discharging the treatment target and performing the surface treatment on the treatment target, and moves the moving surface treatment chamber in which the treatment target is introduced.

3. The surface treatment apparatus according to claim 1 or 2, **characterized in that**
the surface treatment chamber and/or the moving surface treatment chamber comprises a treatment solution discharging section for discharging a treatment solution onto the holding member or the treatment target in a state of not being in immersed in the treatment solution to allow the treatment solution to flow over a surface of the treatment target held by the holding member;
optionally wherein the treatment solution discharging section comprises a hollow member having treatment solution discharge ports provided at predetermined intervals, and the treatment solution discharging section further comprises a swing section for swinging the hollow member in an arrangement direction of the treatment solution discharge ports beyond the predetermined intervals.

4. The surface treatment apparatus according to claim 1 or 2, **characterized in that**
the surface treatment chamber immerses the treatment target in the treatment solution to perform the surface treatment thereon;
optionally wherein the surface treatment chamber comprises a liquid level change processing part for switching between a state where the treatment target is immersed in the treatment solution and a state where the treatment target is not immersed in the treatment solution;
optionally wherein the surface treatment chamber comprises: a front chamber; and an accumulation chamber switchably configured to be communicated with or independent of the front chamber, the accumulation chamber being filled with the treatment solution and the liquid level change processing part switching the liquid level state of the front chamber.

5. The surface treatment apparatus according to any one of claims 1 to 4, **characterized in that**
the surface treatment apparatus further comprises a collection part for collecting the treatment solution adhering to the treatment target in the state of being out of the surface treatment chamber by the loading/unloading mechanism and falling down.

6. The surface treatment apparatus according to any one of claims 1 to 5, **characterized in that**
the surface treatment chamber and/or moving surface treatment chamber comprises a shutter for opening/closing the inlet/outlet.

7. The surface treatment apparatus according to any one of claims 1 to 6, **characterized in that**
the surface treatment apparatus further comprises a housing box body which covers the treatment target in the state of being out of the surface treatment chamber by the loading/unloading mechanism and is moved by the inter-treatment-chamber movement mechanism;
optionally wherein the housing box body comprises a shutter through which the treatment target is taken in/out.

8. The surface treatment apparatus according to any one of claims 1 to 7, **characterized in that**
(a) the loading/unloading mechanism is an actuator; and/or
(b) a plurality of the loading/unloading mechanisms is provided, and each loading/unloading mechanism is configured to be movable independently in the surface treatment chamber arrangement direction; and/or
(c) the surface treatment chambers are provided on both sides of the moving direction of the inter- treatment-chamber movement mechanism.

9. The surface treatment apparatus according to any one of claims 1 to 8, **characterized in that**
the surface treatment chambers are arranged in a plurality of rows, and
the loading/unloading mechanism moves the treatment target held by the holding member across the plurality of rows of the surface treatment chambers.

10. The surface treatment apparatus according to any one of claims 1 to 9, **characterized in that**
a plurality of surface treatment chambers comprises: a plurality of surface treatment chambers for performing a main treatment and a plurality of surface treatment chambers for performing pre-treatment of the main treatment,
some of the plurality of surface treatment chambers for a different main treatment,
further comprising: a control section that controls the inter-treatment-chamber movement mechanism,
the control section selecting and moving a necessary plurality of surface treatment chambers among the plurality of surface treatment chambers, according to the required treatment content for the treatment target, to perform a treatment on the treatment target.

11. The surface treatment apparatus according to any one of claims 1 to 10, **characterized in that**
the plurality of surface treatment chambers comprises surface treatment chambers that perform the same treatment, further comprising: a control section that controls the inter-treatment-chamber movement mechanism, wherein
the control section moving the different treatment target in parallel in a surface treatment chamber that performs the same treatment based on the treatment time in each surface treatment chamber to perform a treatment on the treatment target.

12. A holding member for use in a surface treatment which is performed in such manner that a treatment solution is discharged onto a plate-like holding member and used when the treatment solution flows over the surface of a treatment target held by the holding member to perform a surface treatment, **characterized in that**
the holding member is formed to have a lengthened part whose width is at least one fifth longer than that of the treatment target.

13. The holding member according to claim 12, **characterized in that**
the holding member further comprises dummy plates extending downwardly along the both sides of the plate-like treatment target at the lengthened part.

14. A production method of a treatment target on which a surface treatment is performed, comprising the steps of:
providing a plurality of surface treatment chambers for performing surface treatments;
determining, depending on contents of the surface treatment required for the treatment target, as to which surface treatment chamber and in which order the surface treatment is to be performed; and
introducing the treatment targets in turn into the surface treatment chambers for surface treatment based on the determined treatment order.

15. A surface treatment chamber comprising: a casing having an inlet/outlet shaped to be in coincidence with a cross-sectional shape of a treatment target in order to introduce and discharge the treatment target held by the holding member on a side face; and
a treatment solution discharging section that is provided in the casing and discharges a treatment solution onto a treatment target held by a holding member or onto the holding member to allow the treatment solution to flow over the surface of the treatment target held by the holding member, **characterized in that**
a top surface of the casing is provided with a gap to avoid an interference of a supporting member that supports the holding member with the casing when taking in and out of the treatment target through the inlet/outlet.
